# EUROPÄISCHE PATENTANMELDUNG

(11) **EP 0 562 598 A1**
(43) Veröffentlichungstag der Anmeldung: **29.09.1993**
(21) Anmeldenummer: 93104937.3
(22) Anmeldetag: 25.03.1993
(51) Int. Cl.: B62D 47/02, B60D 5/00, B61D 17/20, B61D 3/10

(54) **Gelenkverbindung zwischen zwei gelenkig miteinander verbundenen Fahrzeugen**

(30) Priorität: 25.03.1992 DE 4209727; 07.05.1992 DE 4215065; 25.06.1992 DE 4220777; 17.08.1992 DE 4227126; 18.09.1992 DE 4231323; 21.10.1992 DE 4235493
(71) Anmelder: HÜBNER Gummi- und Kunststoff GmbH, D-34123 Kassel (DE)
(72) Erfinder:
(74) Vertreter: Walter, Helmut, Dipl.-Ing.

(57) **Zusammenfassung**

Gelenkverbindung zwischen zwei Fahrzeugen mit einem Drehkranzgelenk (4) mit zwei Drehkränzen (5,5'), von denen je einer einem der beiden Fahrzeuge (1,2) zugeordnet ist und die um eine vertikale Knickachse (6) gegeneinander verdrehbar sind, um Knickbewegungen zwischen beiden Fahrzeugen möglich zu machen, wobei elastische Teile, vorzugsweise Gummielemente (11,13,36-38,128,137,138), weitere Bewegungen zwischen beiden Fahrzeugen ermöglichen, **dadurch gekennzeichnet,** daß der eine der beiden Drehkränze (5 bzw. 5') mit dem ihm zugehörigen Fahrzeug (1 bzw. 2) vorzugsweise starr verbunden ist, während der andere der beiden Drehkränze mit dem ihm zugehörigen Fahrzeug über die elastischen Teile verbunden ist, die wie folgt ausgelegt bzw. angeordnet sind:
(a) in Fahrzeuglängsrichtung (3) gerichtete Kräfte, also insbesondere Brems- und Antriebskräfte werden zwischen beiden Fahrzeugen (1,2) unter Zug- bzw. Druckbeanspruchung elastischer Elemente übertragen, die unter dem Einfluß von Druckkräften relativ wenig elastisch verformbar sind,
(b) Nickbewegungen zwischen beiden Fahrzeugen (1,2) um eine horizontal in Fahrzeugquerrichtung gerichtete Nickachse (9) führen zu Zug- und Druckverformungen von elastisch verformbaren Elementen,
(c) gegebenenfalls werden Wankbewegungen zwischen beiden Fahrzeugen (1,2) um eine horizontal in Fahrzeuglängsrichtung gerichtete Wankachse (10) als Schubverformungen von elastisch verformbaren Elementen aufgenommen,
(d) vertikale Abstützkräfte zwischen beiden Fahrzeugen (1,2), führen zumindest überwiegend zur Druckverformung elastisch verformbarer Elemente, die unter dem Einfluß von Druckkräften relativ wenig verformbar sind.

## Beschreibung

Bei Gelenkomnibussen und gleichartig aufgebauten Schienen- und Straßenfahrzeugen ist es derzeit allgemein üblich, den Vorderwagen mit einer Achse bzw. Achsgruppe an jedem Fahrzeugende zu versehen, den hinteren Wagen nur mit einer Achse bzw. Achsgruppe am hinteren Ende zu versehen und den hinteren Wagen am vorderen Ende in einem Verbindungsgelenk auf dem hinteren Ende des vorderen Wagens aufzusatteln. Dabei ist das Verbindungsgelenk im allgemeinen eine Drehkranzverbindung, wobei einer der Ringe, meist der innere Ring dem vorderen Wagen zugeordnet ist, ein zweiter Ring, meist der äußere Ring dem hinteren Wagen zugeordnet ist und der äußere Ring auf dem inneren Ring abgestützt ist und beide Ringe um eine vertikale Achse gegeneinander verdrehbar sind, um Knickbewegungen beider Teilfahrzeuge um diese Hochachse zu ermöglichen, die notwendig sind, damit das Fahrzeug Kurven durchfahren kann. Um Bodenquerwellen überfahren zu können, müssen beide Teilfahrzeuge Nickbewegungen um eine horizontale Querachse ausführen können. Dies wird dadurch ermöglicht, daß der eine der beiden Wagen am einen der beiden Drehringe um quergerichtete Bolzengelenke angeschlossen ist. Meist ist der hintere Wagen über solche Bolzengelenke an den in Fahrzeugquerrichtung um 180° einander gegenüberliegenden Bereichen des äußeren Drehrings angeschlossen, so daß sich die horizontale Nickachse und die vertikale Knickachse im Gelenkzentrum unter einem Winkel von 90° schneiden. Um Wankbewegungen um die Fahrzeuglängsachse zwischen beiden Teilfahrzeugen zu ermöglichen, sind in die Bolzengelenke Gummihülsen integriert.

Diese Lösung wird allgemein als funktionsgerecht, betriebssicher und mit vertretbarem Bauaufwand darstellbar angesehen, sie ist deshalb derzeit eine Standardlösung bei Gelenkomnibussen, gleichgültig ob die Knickbewegungen gedämpft oder gesteuert werden.

Bei anderen Versionen wird das Gelenkfahrzeug aus Vorderwagen und Hinterwagen als torsionssteife Einheit angesehen. Vorder- und Hinterwagen sind nicht um die horizontale Fahrzeugslängsachse gegeneinander tordierbar, Wankbewegungen zwischen den Fahrzeuggliedern sind nicht vorgesehen, lediglich die Nachgiebigkeit der Radfedern gewährleistet die Bodenhaftung, wenn beispielsweise eines der Vorderräder des Fahrzeuges seinen Fahrbahnaufstandpunkt in einer anderen horizontalen Ebene hat als das ihm diagonal gegenüberliegende der Hinterräder des Gelenkfahrzeugs.

Ferner ist eine Ausbildung der oben erwähnten Bolzengelenke derart bekannt, daß zwischen den Lageraugen, die dem Hinterwagen zugeordnet sind und den Lagerbolzen, die dem Außenring der Drehkranzverbindung zugeordnet sind, jeweils eine dünnwandige Gummihülse eingepreßt ist, die bei Nickbewegungen zwischen Vorderwagen und Hinterwagen um ihre Längsachse tordiert wird, aber so druckfest ist, daß sie Kräfte, die für ein Wanken zwischen Vorderwagen und Hinterwagen ursächlich sein könnten, ohne wesentliche Druckverformung aufnehmen. Gemeinsam ist den vorstehend behandelten Lösungen, daß sich Knickachse, Nickachse und gegebenenfalls auch Wankachse im Zentrum der Drehkranzverbindung schneiden. Schwierigkeiten bereiten deshalb diese bekannten Lösungen für die Hersteller von Faltenbälgen, wie sie zwischen den beiden Teilfahrzeugen üblicherweise eingebaut werden, um den Übergangsbereich zwischen beiden Teilfahrzeugen in den Fahrzeugnutzraum einbeziehen zu können. Findet ein unten offener, tunnelförmiger Faltenbalg Anwendung, so ist es schwierig, den Übergangsbereich optimal gegen Umwelteinflüsse abzuschirmen. Ist der Faltenbalg dagegen zur optimalen Abschirmung des Übergangsbereiches gegen Umgebungseinflüsse als ringsum geschlossene Röhre mit unterhalb des Gelenks liegendem Boden ausgebildet, so ermöglicht die Notwendigkeit, auf die Nickbewegungen Rücksicht zu nehmen, einen nur geringen Abstand zwischen Balgboden und Fahrbahn, was zu häufiger Beschädigung bzw. vorzeitigem Verschleiß des Balgbodens führen kann. Findet ein Faltenbalg Anwendung, der außer den Endrahmen für den Anschluß an den beiden Fahrzeugen bzw. Teilfahrzeugen noch einen Mittelrahmen aufweist, sei es um den Faltenbalg zu stabilisieren, sei es um ihn teilbar zu machen, so kommt hinzu, daß der Mittelrahmen bei der üblichen Zuordnung zum Gelenk sowohl bezüglich der Knick- als auch der Nickbewegungen zwischen beiden Teilfahrzeugen stets auf der Winkelhalbierenden gehalten werden muß, was einen erheblichen baulichen Aufwand mit sich bringen kann, insbesondere dann, wenn der Balgmittelrahmen dem Gelenk obendrein querverschieblich zugeordnet werden soll, um die Kinematik der Bewegungen zwischen den Teilfahrzeugen und die Kinematik der Balgbewegung aufeinander abzustimmen.

Vor dem Hintergrund der oben geschilderten Schwierigkeiten, die auftreten können, wenn sich Knickachse, Nickachse und gegebenenfalls Wankachse im Zentrum der Drehkranzverbindung schneiden, ist eine bekannte Lösung entstanden, bei der die Nickachse in einem bestimmten Abstand vor oder hinter der vertikalen Nickachse angeordnet ist und deshalb die die Nickachse definierenden Bolzengelenke in Fahrzeuglängsrichtung relativ zum Zentrum der Drehkranzverbindung versetzt sind und außerdem einen radialen Abstand vom Außenumfang der Drehkranzverbindung haben.

Entsprechende Überlegungen gelten auch bezüglich einer ebenfalls bekannten Lösung für ein gattungsgemäßes Gelenkfahrzeug, bei dem die Rahmen des Vorderwagens und des Hinterwagens elastisch an der Drehkranzverbindung angeschlossen sind (EP 0 475 341 Al). Diese Lösung hat jedoch den doppelten Nachteil des erheblichen Bauaufwandes infolge der beiden elastischen Anschlüsse vor allem aber unkontrollierter Fahrzustände, die eine erhebliche Gefahrenquelle darstellen können, insbesondere wenn auf Vorderwagen und Hinterwagen ungleiche Vortriebskräfte wirken, indem beispielsweise ein Gelenkomnibus als Schubgelenkbus ausgebildet ist, dessen angetriebene Achse die des Hinterwagens ist oder indem ein Gelenkomnibus mit angetriebener Hinterachse des Vorderwagens sich auf einer Talfahrt befindet und der Vorderwagen stärker als der Hinterwagen gebremst wird. Bei solchen Fahrtzuständen kann auf das Heck des Vorderwagens eine nach unten gerichtete, auf den Bug des Hinterwagens eine nach oben gerichtete Kraft wirken, diese Kräfte, die die Drehkranzverbindung zu einer Kippbewegung um die horizontale Querachse veranlassen, die so groß werden kann, daß die Gelenkanschlüsse sogar überbelastet werden und ausreißen.

Dieser Problematik sieht sich der Fahrzeughersteller gegenüber, weil der große Aufwand die Herstellungskosten des Gelenkfahrzeugs in die Höhe treibt und er für die Sicherheit des Fahrzeugbetriebes verantwortlich ist. Dieser Problematik sieht sich der Gelenkhersteller gegenüber, weil er sein Gelenk angesichts dieser Problematik mit erhöhtem Aufwand und demzufolge höheren Kosten herstellen muß und dieser Problematik sieht sich schließlich der Faltenbalghersteller gegenüber, weil er "seinen" Faltenbalg erhöhtem Verschleiß ausgesetzt sieht.

Demzufolge ist es Aufgabe der Erfindung, eine Lösung vorzuschlagen, die eine baulich einfache, betriebssichere und verschleißarme Gelenkverbindung zwischen Vorderwagen und Hinterwagen eines Gelenkfahrzeugs, insbesondere eines straßenverkehrsfähigen Gelenkomnibusses möglich macht.

Die erfindungsgemäße Lösung dieser Aufgabe ergibt sich aus den Patentansprüchen, wobei die Patentansprüche zum Teil eher generelle Lösungsmöglichkeiten, teils eher ins einzelne gehende Lösungsmöglichkeiten aufzeigen, ohne daß dies im einzelnen mehr erläutert werden müßte, als es sich aus den Ansprüchen selbst und/oder der nachfolgenden Beschreibung der einzelnen Figuren der Zeichnung ergibt.

Die Erfindung ist nachfolgend anhand der Zeichnung erläutert. In der Zeichnung zeigen:
- Fig. 1: einen Blick in den Übergangsbereich zwischen den beiden Teilfahrzeugen eines Gelenkomnibusses mit einer erfindungsgemäß ausgebildeten Gelenkausbildung,
- Fig. 2: den in Fig. 1 mit II bezeichneten Teilbereich in größerer Darstellung,
- Fig. 3: einen Schnitt nach der Linie III-III in Fig. 1,
- Fig. 4: in schematischer Darstellung eine Gelenkversion zur Erläuterung eines Teilproblems, mit dem sich die Erfindung befaßt,
- Fig. 5: eine schematische Perspektivdarstellung einer für besonders zweckmäßig erachteten Gelenkausbildung mit nur einseitig elastischer Gelenkausbildung an einem Teilfahrzeug, das der Vorderwagen ist,
- Fig. 6: eine Einzelheit in einem bestimmten Betriebszustand,
- Fig. 7: eine Möglichkeit einer Übergangsplattenlagerung, die bei der erfindungsgemäßen Gelenkausbildung besonders zweckmäßig ist.
- Fig. 8: in einer Fig. 1 entsprechenden Darstellung eine Variante für die Ausbildung elastischer Elemente für den elastischen Anschluß der Drehgelenkverbindung am einen der beiden Teilfahrzeuge eines Gelenkomnibusses, wobei dieses eine Teilfahrzeug der Vorderwagen ist (analog zu Fig. 1),
- Fig. 9: eines von zwei gleichen der insgesamt drei bei der Lösung gemäß Fig. 8 zur Anwendung kommenden Metall-Gummi-Metall-Hülsenlager ebenfalls in perspektivischer Darstellung,
- Fig. 10: in perspektivischer Darstellung ein vorzugsweise als Einzellager zur Anwendung kommendes Metall-Gummi-Metall-Hülsenlager,
- Fig. 11: eine Anordnung gemäß Fig. 1, jedoch mit zwei Lagern gemäß Fig. 10 als Draufsicht,
- Fig. 12: in einer Fig. 1 entsprechenden Darstellung einen Übergangsbereich mit Verschiebemöglichkeit für den Balgmittelrahmen,
- Fig. 12a: einen Ausschnitt aus Fig. 12 in größerer Darstellung,
- Fig. 13: einen Querschnitt durch den in Fig. 12 a dargestellten Bereich,
- Fig. 14 und Fig. 15: je eine erfindungsgemäße Baugruppe, wobei die Baugruppe nach Fig. 15 eine Weiterentwicklung der Baueinheit nach Fig. 14 ist und
- Fig. 16: die Federkennlinien der Baueinheiten nach den Figuren 14 und 15.

Der vordere Wagen bzw. das vordere Teilfahrzeug eines Gelenkomnibusses ist mit 1 bezeichnet, von diesem vorderen Teilfahrzeug ist nur das hintere Ende schematisch dargestellt, es wird unterstellt, daß dieses vordere Teilfahrzeug an jedem seiner Enden eine Achse bzw. Achsgruppe bzw. entsprechende Radpaare je Achse hat.

Entsprechend ist das vordere Ende des hinteren Wagens bzw. Teilfahrzeuges 2 schematisch dargestellt. Es wird unterstellt, daß dieses hintere Teilfahrzeug nur an seinem hinteren, also nicht dargestellten Ende mit einer Achse bzw. Achsgruppe bzw. entsprechende Radpaare je Achse versehen ist.

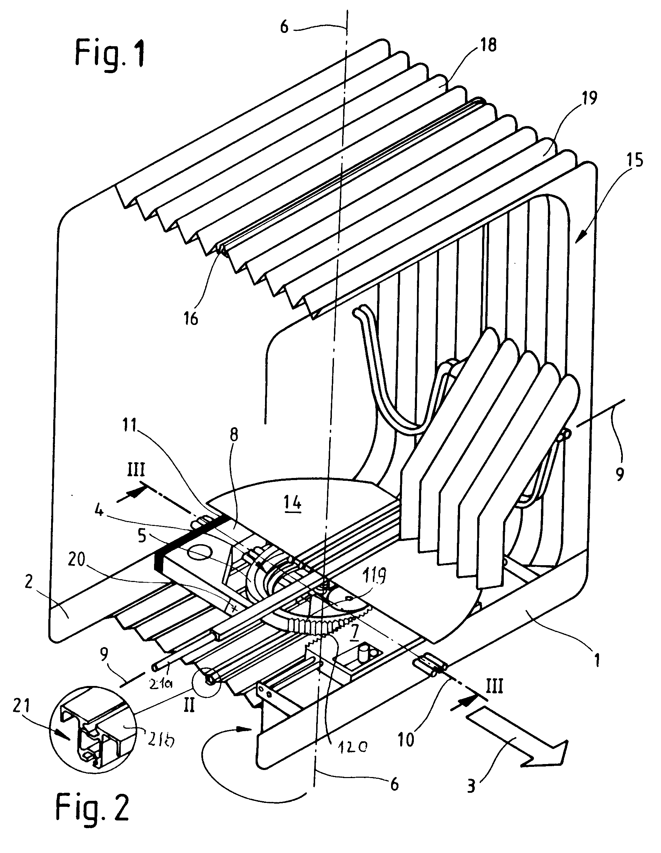

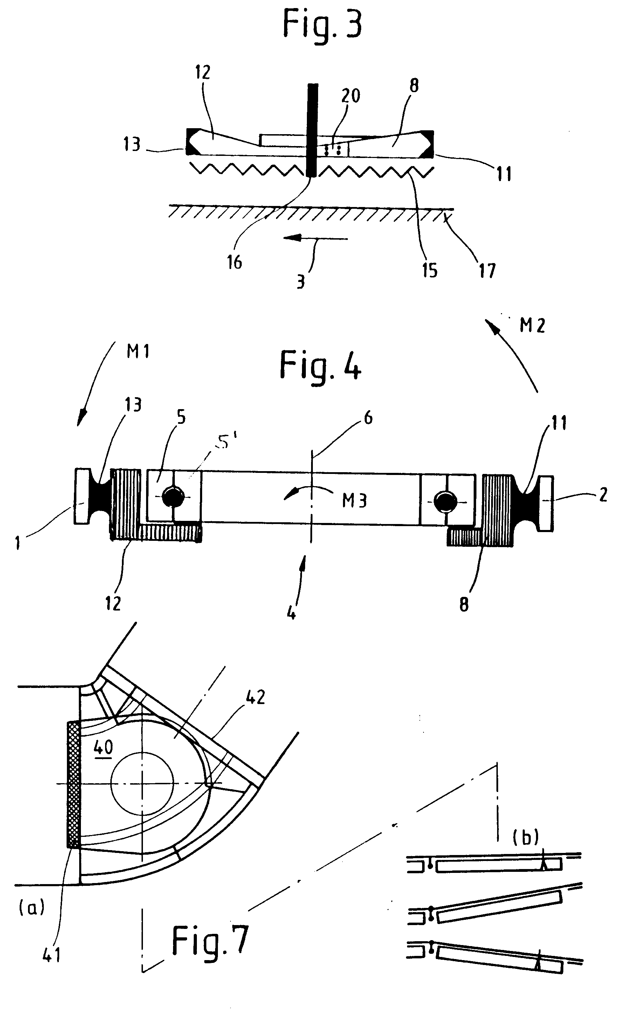

Die Fahrtrichtung des Gelenkomnibusses bei normaler Vorwärtsfahrt ist in den Figuren 1 und 3 durch den Pfeil 3 gekennzeichnet. Der Antrieb des gesamten Gelenkomnibusses ist vorzugsweise im hinteren Teilfahrzeug angeordnet. Er kann entweder auf eine der Achsen bzw. Achsgruppen des vorderen Teilfahrzeugs einwirken, so daß der gesamte Gelenkbus "gezogen" wird, oder er kann auf die Achse bzw. Achsgruppe des hinteren Teilfahrzeugs einwirken, so daß der gesamte Gelenkomnibus "geschoben" wird.

Beide Teilfahrzeuge 1,2 sind in einem Niederflur-Drehkranzgelenk 4 miteinander verbunden, dessen äußerer und oberer Drehring 5 dem hinteren Teilfahrzeug 2 zugeordnet ist. Dieser Drehring 5 ist auf dem inneren und unteren Drehring 5' des Drehkranzgelenks 4 abgestützt (Fig. 4), der dem vorderen Teilfahrzeug 1 zugeordnet ist. Äußerer Drehring 5 und innerer Drehring 5' sind um die Hochachse 6 um einen Knickwinkel relativ gegeneinander verdrehbar, so daß die beiden Teilfahrzeuge 1,2 Knickbewegungen um diese Hochachse 6 relativ zueinander ausführen können. Diese Knickbewegungen werden bei gezogenem Gelenkomnibus gedämpft, beim geschobenen Gelenkomnibus werden sie gesteuert unter Einschluß der Dämpfung.

Insoweit liegen baulich und funktionell übliche Verhältnisse vor, so daß auf sie nicht näher eingegangen werden muß. Die Vorrichtung zur Dämpfung bzw. Steuerung der Knickbewegungen ist deshalb in diesem Zusammenhang auch nur generell mit dem Bezugszeichen 7 bezeichnet.

Bei bisher üblichen Gelenkomnibussen ist der innere bzw. untere Drehring des Drehkranzgelenks auf dem Untergestell des vorderen Teilfahrzeuges 1 aufgelegt und mit diesem verbunden, während in zwei in Fahrzeugquerrichtung diametral gegenüberliegenden Bereichen 20 dem äußeren Drehring 5 horizontal nach außen gerichtete Zapfen zugeordnet sind, die von Lageraugen an den Enden einer gabelförmigen Traverse 8 drehbar umschlossen werden, die ihrerseits fest dem Untergestell des hinteren Teilfahrzeugs 2 zugeordnet ist. Die gemeinsame, in Fahrzeugquerrichtung gerichtete Längsachse 9 der Zapfen ist die Nickachse, um die beiden Teilfahrzeuge 1,2 bei üblicher Gelenkausbildung in vertikaler Richtung relativ zueinander verschwenken können ("Nickbewegungen"). Zwischen den Bolzen können bei üblicher Gelenkausbildung Gummihülsen angeordnet sein, die Wankbewegungen zwischen beiden Teilfahrzeugen, also Relativbewegungen um die Längsachse 10 des Fahrzeugs zulassen. Diese Gummihülsen können auch durch feste Zuordnung zu Bolzen und Hülsen und entsprechende Tordierbarkeit die Nickbewegungen ermöglichen und dabei keine Wankbewegungen zwischen den beiden Teilfahrzeugen zulassen oder durch entsprechende Druckverformbarkeit solche Wankbewegungen zulassen.

Hochachse 6, Querachse 9 und Längsachse 10 schneiden sich dabei zumindest etwa im Mittelpunkt des Drehkranzgelenkes 4.

Abweichend von dieser bisher allgemein üblichen Lösung ist nun die Traverse 8 an beiden Enden ihrer Gabelzinken in den Bereichen 20 starr am äußeren Drehring 5 angeschlossen und zwar in Bereichen, in denen bei bekannten Fahrzeugen die oben beschriebenen Bolzengelenke angeordnet sind, d.h. symmetrisch zur Querachse 9. Es handelt sich um einfache Schraubverbindungen 20. Andererseits ist die Traverse 8 nicht mehr starr am Untergestell des hinteren Teilfahrzeugs 2 angeschlossen, sondern über ein Gummielement 11. Dieses Gummielement ist in Fig. 1 als einfachste Lösung als eine parallel zur Nickachse 9 verlaufende Leiste dargestellt, die so dimensioniert ist, daß sie Bewegungen zwischen beiden Teilfahrzeugen in Richtung der Längsachse 10 unter relativ geringer Druck- oder Schubverformung, Nickbewegungen um eine zur Achse 9 parallele Achse unter teilweise Druck-, teilweise Zugverformung und gegebenenfalls Wankbewegungen um die Längsachse 10 unter Schubverformung zuläßt. Das "Gummielement" besteht jedoch vorzugsweise zunächst gemäß Fig. 3. aus zwei im Querschnitt dreieckigen Leisten, wobei die Hypothenusen der beiden Leistenquerschnitte etwa einen Abschnitt eines Zylinders bilden, dessen Längsachse die Querachse 9 ist. In entsprechender Weise ist nicht mehr entsprechend dem Stand der Technik der innere bzw. untere Drehring des Drehkranzgelenks 4 auf dem Untergestell des vorderen Teilfahrzeugs 1 aufgelegt und starr an diesem befestigt. Der untere, innere Drehring ist stattdessen ebenfalls einer der Traverse 8 ähnlichen Traverse 12 aufgelegt und starr mit dieser verbunden, die ihrerseits über ein dem Gummielement 11 entsprechendes Gummielement 13 am hinteren Ende des vorderen Teilfahrzeugs gelagert ist (Fig. 3). Möglich ist es jedoch durchaus, den inneren, unteren Drehring 5' gemäß dem Stand der Technik starr mit dem Untergestell des vorderen Teilfahrzeugs 1 zu verbinden. In diesem Fall ist die Nickachse gegenüber der Nickachse 9 in Fig. 1 in Fahrzeuglängsrichtung verschoben. Im Fall symmetrischer Ausbildung des Anschlusses der beiden Drehringe 5,5' am jeweiligen Teilfahrzeug 1 bzw. 2 gemäß Fig. 3 bleibt die Nickachse gemäß Fig. 1 in der Gelenkmitte.

Das Gummielement 11 gemäß Fig. 1 bzw. das Gummielement 11 gemäß Fig. 3 bzw. die Gummielemente 11,13 gemäß Fig. 3 bestehen aus einem elastischen Werkstoff, für den Gummi nur als Gattungsbezeichnung gewählt ist. Seine Eigenschaften sind so bestimmt, daß zwischen vorderem und hinterem Teilfahrzeug Zug- und Druckkräfte in und entgegen der Richtung des Pfeils 3 übertragen werden können. Die beiden Gummielemente lassen außerdem die notwendigen Nickbewegungen zwischen beiden Teilfahrzeugen zu. Die Gummielemente lassen schließlich die notwendigen Wankbewegungen zwischen beiden Teilfahrzeugen 1,2 zu. Knickbewegungen zwischen beiden Teilfahrzeugen um die Hochachse 6 werden schließlich wie beim Stand der Technik durch Relativbewegungen zwischen innerem und äußerem Drehring des Drehkranzgelenkes 4 ermöglicht.

Bevorzugt ist eine Lösung, bei der nur zwischen einem der Teilfahrzeuge 1,2 und dem ihm zugehörigen Drehring bzw. -kranz des Drehkranzgelenkes 4 in der beschriebenen Weise eine elastische Verbindung vorgesehen ist. Dabei kann die noch mehr bevorzugte Lösung die Abwandlung der in Fig. 1 dargestellten Lösung in der Weise sein, daß die Traverse 8 sowohl am hinteren Teilfahrzeug 2 als auch an dem äußeren Drehring bzw. Drehkranz 5 starr befestigt und der innere Drehring bzw. Drehkranz an dem vorderen Teilfahrzeug 1 in der beschriebenen Weise angeschlossen ist.

Ist nun im Bereich zwischen beiden Teilfahrzeugen 1,2 in üblicher Weise eine Übergangsbrücke 14 angeordnet und ist der Übergangsbereich zwischen beiden Teilfahrzeugen von einem Faltenbalg 15 umschlossen, der mit Endrahmen an den einander zugekehrten Stirnseiten beider Teilfahrzeuge befestigt ist, so ergibt sich folgende Problematik.

Ist die Traverse 8 starr am hinteren Teilfahrzeug 2 befestigt und mit Bolzengelenken um die Querachse 9 drehbar am äußeren Drehring 5 angeschlossen, so muß zwischen dem Drehkranzgelenk 4 und dem Boden des Faltenbalges ein relativ großer Abstand eingehalten werden, um beim Nicken des hinteren Teilfahrzeugs 2 um die Querachse 9 gegenüber dem vorderen Teilfahrzeug 1 und dem dabei eintretenden Schwenken der Traverse 8 um die Querachse 9 die Traverse 8 nicht am Boden des Faltenbalgs anstoßen zu lassen. Der Abstand zwischen Faltenbalgboden und Fahrbahn 17 ist entsprechend gering und die Gefahr groß, daß der Faltenbalgboden in häufige Berührung mit der Fahrbahn 17 kommt. Erfahrungsgemäß verschleißt der Boden des Faltenbalgs wesentlich vor den Seitenwänden und dem Dach des Faltenbalges, er muß mit erheblichem Aufwand ausgewechselt werden.

Wird der Innenring 5' des Drehkranzgelenks 4 am vorderen Teilfahrzeug 1 und/oder der Außenring 5 des Drehkranzgelenks 4 am hinteren Teilfahrzeug über ein Gummigelenk 11 bzw. 13 am vorderen bzw. hinteren Teilfahrzeug angelenkt, muß auf entsprechend große Schwenkbewegungen keine Rücksicht genommen werden, der Faltenbalgboden kann viel näher an das Drehkranzgelenk 4 herangerückt und entsprechend von der Fahrbahn 17 entfernt angeordnet sein, die Gefahr seiner vorzeitigen Zerstörung durch häufige Fahrbahnkontakte ist deutlich gemindert.

Der Vorteil ist erreichbar, wenn entweder der Innenring 5' des Drehkranzgelenks 4 am Vorderwagen 1 oder der Außenring 5 des Drehkranzgelenks 4 am Hinterwagen 2 elastisch angeschlossen ist, wobei diese Lösung gegenüber der Lösung, bei der sowohl der Innenring des Drehkranzgelenks 4 am Vorderwagen 1 als auch der Außenring 5 des Drehkranzgelenks 4 am Hinterwagen 2 elastisch angeschlossen sind, den zusätzlichen Vorteil baulicher Einfachheit und eines exakter voraussehbaren Fahrverhaltens hat, u.a. deswegen, weil im zweiten Fall durch die beiden elastischen Elemente 11,13 (Fig. 3) zwei Nickachsen (horizontale Querachsen, um die die Teilfahrzeuge relativ zueinander nicken, wenn beispielsweise eine Bodenquerwelle überfahren wird) definiert sind, während im ersten Fall nur eine solche Nickachse definiert ist.

Die Gefahr vorzeitiger Zerstörung des Balgbodens durch häufigen Fahrbahnkontakt ist dann zusätzlich gemindert, wenn in weiterer Ausgestaltung der Erfindung der Faltenbalg in seinem Bodenbereich Falten geringerer Höhe als im Dach- und Seitenwandbereich aufweist.

Die Erfindung erbringt den weiteren Vorteil, einfacher zu sein als bisherige Lösungen mit Bolzengelenken in den Bereichen 20 und ein niedrigeres Drehkranzgelenk zu ermöglichen. Die einfachere Bauweise ergibt sich aus dem Umstand, daß die Gummigelenke 11,13 und insbesondere nur ein solches Gummigelenk zwischen den Traversen 8,12, gegebenenfalls 8 oder 12 und den beiden Teilfahrzeugen 1,2, gegebenenfalls einem dieser Teilfahrzeuge einfacher sind bzw. ist als die Bolzengelenke zwischen der Traverse 8 und dem äußeren Drehring 5. Auch die Störanfälligkeit und die Notwendigkeit der Wartung sind geringer. Die niedrigere Bauweise des Drehkranzgelenks 4 ergibt sich daraus, daß die Bolzengelenke einen höheren äußeren Drehring 5 erfordern als der starre Anschluß 20 der Traverse 8 am äußeren Drehring 5 bzw. eine äquivalente Bauweise. Das Gewicht der Anordnung wird niedriger gehalten werden können als bei den bisherigen Anordnungen mit den Bolzengelenken.

Schließlich besteht noch ein wesentlicher Vorteil darin, daß dem Faltenbalg 15 ein Mittelrahmen 16 zugeordnet werden kann, der zwar im unteren Bereich dem Drehkranzgelenk 4 gegenüber querverschieblich (in Richtung der Nick- oder Querachse 9), im übrigen aber winkelfest dem Drehkranzgelenk 4 zugeordnet sein kann und trotzdem immer entsprechend der Winkelhalbierenden des Nickwinkels steht; bei den bisher üblichen Anordnungen ist dies nur mit einer aufwendigen Lenkerführung zu erzielen. Der Mittelrahmen 16 kann allein der Stabilisierung des zwischen seinen Endrahmen einteiligen Balges dienen oder außerdem der Verbindung zweier Balghälften 18,19 dienen, von denen jeweils eine mit ihrem Endrahmen einem der beiden Teilfahrzeuge 1,2 zugeordnet ist.

Kommen die beiden Gummigelenke 11,13 zur Anwendung, um den Nickwinkel anteilig vom vorderen Gummigelenk 13 und vom hinteren Gummigelenk 11 aufgenommen zu haben, so hat jedes Gummigelenk etwa die Form eines Schalenabschnittes, dessen Mittelachse die Mitte des Drehkranzgelenks 4 schneidet und jedes Gummigelenk 11 bzw. 13 kann ein zwischen zwei gekrümmten Metallplatten einvulkanisiertes Elastomerelement sein oder jedes Gummigelenk kann aus zwei entsprechend aufgebauten, im Querschnitt dreieckigen Leisten (wie bereits erwähnt) bestehen, womit eine insoweit baulich einfachere Lösung aufgezeigt ist.

Der Mittelbügel 16 hält den Faltenbalg 15 in jeder Fahrsituation in sicherem Abstand zur Fahrbahn 17 winkelhalbierend zum Knickwinkel, winkelhalbierend zum Nickwinkel durch seine vertikale Zentrierung und im jeweils spannungsfreien Zustand bezogen auf seitlichen Versatz durch eine untere Verschiebeführung 21 gegenüber dem die Knickbewegungen der beiden Teilfahrzeuge 1,2 zulassenden Drehkranzgelenk 4. Die Verschiebeführung 21 besteht aus zwei teleskopartig gegeneinander verschiebbaren Teilen 21a und 21b von denen ein Teil beispielsweise eine Führungsstange 21a ortsfest dem Drehkranzgelenk 4 zugeordnet ist und das andere Teil 21b beispielsweise die Bodentraverse des Faltenbalgrahmens 16 ist (Fgi. 1,2).

Treten bei der vorbeschriebenen Lösung an den beiden Teilfahrzeugen, d.h. Vorderwagen und Hinterwagen ungleiche Antriebsmomente auf, die nicht oder nur unvollkommen kompensiert werden, indem beispielsweise während der Talfahrt bei einem Gelenkfahrzeug mit angetriebener Hinterachse des Vorderwagens der Hinterwagen den Vorderwagen schiebt und die Knickstabilisierung unzulänglich ist, so können im Heckbereich des Vorderwagens Kippmomente M1 auftreten, die das Heck des Vorderwagens nach unten drücken, während im Bugbereich des Hinterwagens gleichgerichtete Momente M2 auftreten, die den Bug des Hinterwagens nach oben drücken (Fig. 4).

Auf das Drehkranzgelenk wirkt ein Schwenkmoment M3, durch das das Drehkranzgelenk in sich und in seinen Anschlüssen belastet und es besteht die Gefahr der Zerstörung, zumindest aber Beschädigung des Drehkranzgelenks und seiner Anschlüsse. Diese Gefahr besteht insbesondere bei Anwendung sowohl des Gummigelenks 13 als auch des Gummigelenks 11.

Dieser Gefahr wird nun erfindungsgemäß auf zwei mögliche Arten begegnet. Bei der einen Lösung werden die beiden elastischen Anschlüsse beibehalten, eine zweckentsprechende Steuerung sorgt jedoch dafür, daß die Momente M1 und M2 einander entgegengerichtet wirken und einander aufheben. Es kann sich dabei um eine einfache Hebelsteuerung handeln. Bei der anderen Lösung mit nur einem der elastischen Anschlüsse, bei der nur der Außenring des Drehkranzgelenks am Hinterwagen oder der Innenring des Drehkranzgelenks am Vorderwagen über ein elastisches Element ("Gummigelenk") der dargestellten Art angeschlossen wird, ist die Gefahr der Ausbildung solcher Kippmomente so gering, daß auf eine entsprechende Maßnahme verzichtet werden kann. Es ist damit ein weiterer wesentlicher Vorteil des nur einseitigen elastischen Anschlusses des Drehkranzgelenks 4 am Vorderwagen 1 oder am Hinterwagen 2 mit dem elastischen Element 11 oder 13 aufgezeigt.

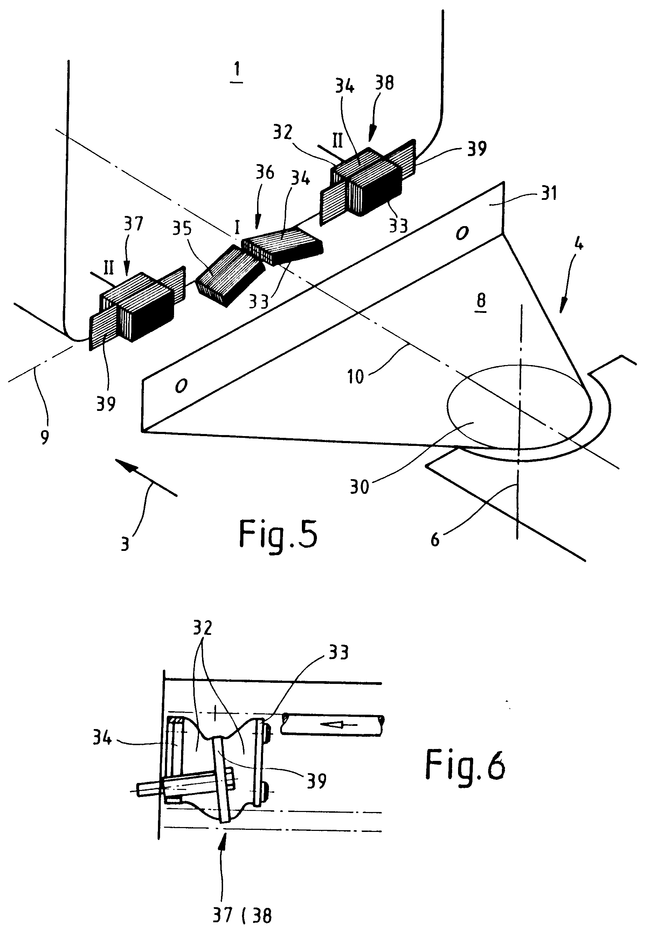

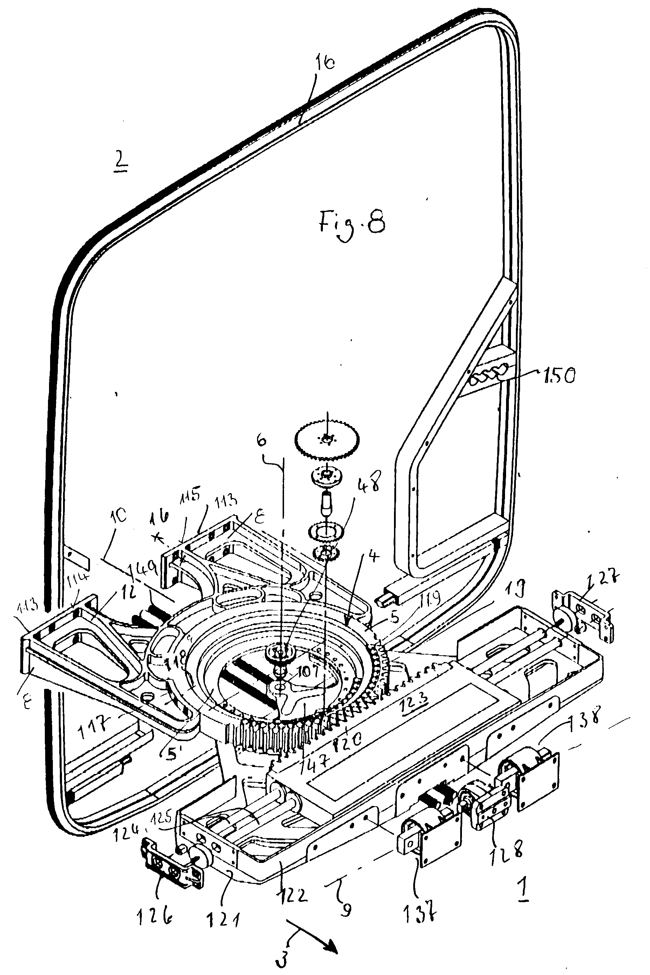

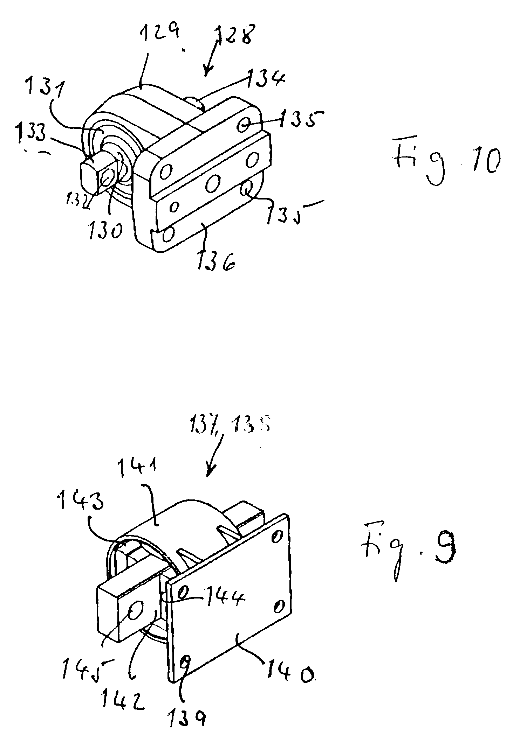

Um zu dem Ergebnis gemäß Fig. 5 zu kommen, kann das Prinzip eines Lenkerstangenpaares zur Anwendung kommen, von dem jede Lenkerstange am einen Ende am Vorderwagen 1 und am anderen Ende am Hinterwagen 2 angelenkt ist und beide Lenkerstangen des Lenkerstangenpaares zwischen ihren Enden in der horizontalen Quermittelebene des Drehkranzgelenks 4 einander kreuzen. Im Fall der Fig. 4 ist das Moment M3 die Summe der Momente M1 und M2, im Fall der Fig. 5 ist der Moment M3 die Differenz der Momente M1 und M2.

Nachfolgend wird nun eine Gelenkverbindung beschrieben, die dann besonders zweckmäßig ist, wenn nur eine einseitig elastische Anbindung des Drehkranzgelenks am einen der beiden Teilfahrzeuge infrage kommen soll und zwar die elastische Lagerung des Drehkranzgelenks 4 am Vorderwagen 1 (Fig. 5).

Die vertikale Schwenkachse ist wieder mit 6 bezeichnet, die horizontal in Fahrzeugquerrichtung verlaufende Nickachse ist im tatsächlich zu erwartenden Bereich mit 9 bezeichnet und die horizontal in Fahrzeuglängsrichtung verlaufende Wank- und Fahrzeuglängsachse mit 10. Der Pfeil 3 kennzeichnet die Fahrtrichtung bei üblicher Vorwärtsfahrt. Der Innenring des Drehkranzgelenks 4 ist auf einer steifen horizontalen Platte 30 befestigt, die ihrerseits an der Traverse 8 sitzt, die am Gegenende zur Platte 30, d.h. dem dem Vorderwagen 1 zugekehrten Ende, in einer vertikal angeordneten Platte 31, der Vorderwagenanbindung, endet.

Die Zuordnung der Vorderwagenanbindung 31 zum Vorderwagen 1 erfolgt über Gruppen von grundsätzlich gleich aufgebauten Metall-Gummi-Metallelementen, wobei jeweils eines dieser Metall-Gummi-Metallelemente in an sich bekannter Weise eine Gummiplatte 32 aufweist, die zwischen zwei starren Platten 33,34 befestigt ist. Die Platten 33,34 sind bevorzugt und üblicherweise Metallplatten, zwischen denen die Gummiplatte 32 einvulkanisiert ist, obwohl auch andere Materialien und Befestigungsweisen möglich sind und insoweit die Bezeichnung "Metallplatte" nur eine Gattungsbezeichnung ist.

Zwei solcher Metall-Gummi-Metallelemente 35,36 sind nun horizontal unmittelbar neben der lotrechten Fahrzeuglängsmittelebene, in der die Wankachse 10 liegt, symmetrisch zu dieser angeordnet. Die unteren Metallplatten der Metall-Gummi-Metallelemente 35,36 sind auf dem Vorderwagen 1 abgestützt, während sich auf den oberen Metallplatten der Metall-Gummi-Metallelemente 35,36 der Hinterwagen 2 abstützt. Da der Vorderwagen 1 an jedem Ende eine Achse bzw. Achsgruppe hat, der Hinterwagen jedoch nur am hinteren Ende und der Innenring des Drehkranzgelenks 4 auf der Platte 30 gehalten und damit dem Vorderwagen 1 zugeordnet ist, während der Außenring des Drehkranzgelenkes 4 dem Hinterwagen 2 zugeordnet ist und sich auf dem Innenring abstützt, werden die vertikalen Abstützkräfte des Hinterwagens 2 über die Metall-Gummi-Metallelemente 35,36 in den Vorderwagen 1 eingeleitet. Die Gummi-platten der Metall-Gummi-Metallelemente 35,36 werden dabei durch Druckkräfte beansprucht.

Bei entsprechender Schubsteifigkeit der Gummiplatten der Metall-Gummi-Metallelemente 35,36 können diese Metall-Gummi-Metallelemente 35,36 auch um 90° gedreht angeordnet sein.

Die Zuordnung der Metall-Gummi-Metallelemente 35,36 zum Vorder- und Hinterwagen kann funktionsgerecht in jeder beliebigen Weise erfolgen, so daß davon abgesehen wird, eine solche Lösung im einzelnen zu zeigen.

Seitlich von den Metall-Gummi-Metallelementen 35,36, aber wiederum symmetrisch zur Fahrzeuglängsmittelebene, näher bzw. nahe an der vertikalen Fahrzeugaußenkontur sind nun weitere Metall-Gummi-Metallelemente 37,38 angeordnet. Während aber die Metall-Gummi-Metallelemente 35,36 hauptsächlich so drucksteif sind, daß sie die Abstützkräfte des Hinterwagens 2 auf den Vorderwagen 1 übertragen können, sind die Metall-Gummi-Metallelemente 37,38 in Fahrzeuglängsrichtung so drucksteif, daß sie Brems- und Antriebskräfte zwischen beiden Teilfahrzeugen 1,2 ohne zu große Relativbewegungen in Fahrzeuglängsrichtung übertragen können, sie sind also funktionell und gegebenenfalls sogar physisch gegenüber den Metall-Gummi-Metallelementen 35,36 um 90° gedreht angeordnet. Sie sind damit in vertikaler Richtung relativ schubweich, um Wankbewegungen zwischen beiden Teilfahrzeugen um die Wankachse 10 möglichst wenig zu behindern; diesem gewollten Verhalten kommt auch die Anordnung der Metall-Gummi-Metallelemente 37,38 relativ weit außen entgegen.

Um nun Nickbewegungen zwischen beiden Teilfahrzeugen 1,2 in Grenzen zuzulassen, jedoch die Nickwege angemessen zu begrenzen, sind die Metall-Gummi-Metallelemente 37,38 durch eine starre Zwischenplatte 39 geteilt, oder zu beiden Seiten der Zwischenplatte 39 ist ein Metall-Gummi-Metallelement 37,38 angeordnet mit der Zwischenplatte 39 als gemeinsamer einer Deckplatte. Dabei sind die äußeren Deckplatten 33,34 mit dem Vorderwagen 1 verbunden, während die Zwischenplatte 39 beider Metall-Gummi-Metallelemente 37,38 mit dem Hinterwagen 2 verbunden sind. Die funktionsgerechte Verbindung kann auch hier wieder beliebig erfolgen, so daß von der Darstellung einer Möglichkeit abgesehen werden kann.

Bei Nickbewegungen zwischen beiden Teilfahrzeugen 1,2 werden nun die Metall-Gummi-Metallelemente 37,38 in der in Fig. 6 dargestellten Weise zug- und druckverformt (wo die Gummi-platten der Metall-Gummi-Metallelemente 37,38 bei der Übertragung von Schubkräften druck-, bei der Übertragung von Zugkräften zugverformt werden), so daß eine gute Nickmöglichkeit mit einer guten Dämpfungscharakteristik dieser Bewegungen einhergeht.

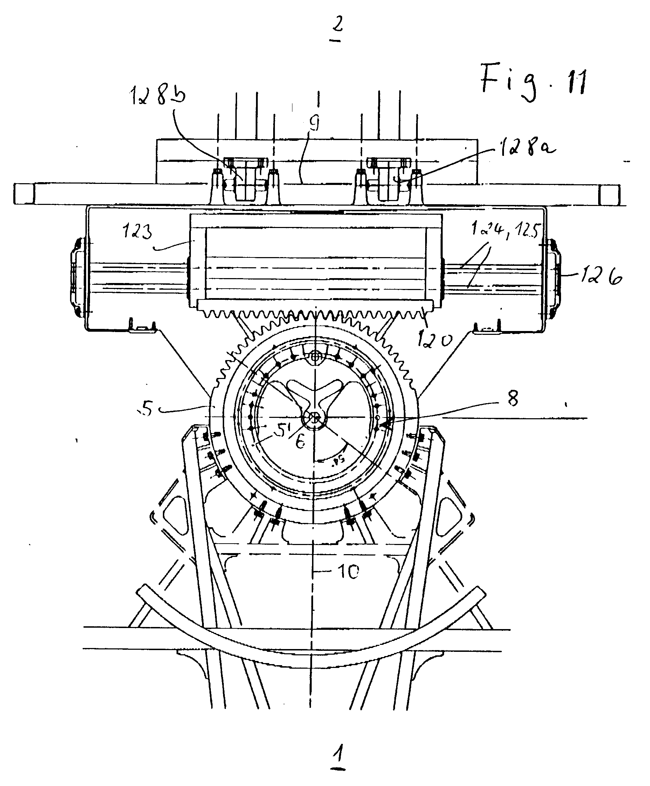

Für die Zuordnung einer Übergangsplatte 40 zu der Gelenkverbindung wird erfindungsgemäß die Ausbildung nach Fig. 7 mit der Figurengruppe (a) und (b) vorgeschlagen.

Es wirkt eine Gummiplatte 41 als Scharnier zwischen der Übergangsplatte 40 und einem der Teilfahrzeuge, insbesondere dem Vorderwagen, wobei die Abstützung der Übergangsplatte 40 auf dem Hinterwagen 2 in geeigneter, bekannter Weise derart erfolgt, daß horizontale Schiebebewegungen der Platte 40 gegenüber dem Teilfahrzeug 2 möglich sind. Diese Anordnung hat den Vorteil praktischer Wartungsfreiheit, baulicher Einfachheit und bestmöglicher Berücksichtigung aller betriebsbedingten Relativbewegungen. Die Gummiplatte ist in Fahrzeuglängsrichtung drucksteif, in den anderen Richtungen schubweich.

Gegebenenfalls ist es zweckmäßig, die Metall-Gummi-Metallelemente 35,36 in der Weise spitzdachförmig anzuordnen, daß der First des "Daches" in der lotrechten Fahrzeugslängsmittelebene liegt und die Metall-Gummi-Metallelemente 35,36 von dieser Firstlinie aus symmetrisch nach beiden Seiten abfallen. Diese Lösung könnte Funktionsvorteile haben, in dem ausreichende Härte gegenüber den Auflagekräften des Hinterwagens gegeben ist, gleichzeitig aber Wankbewegungen auch von den Metall-Gummi-Metallelementen 35,36 nur ein geringer Widerstand entgegengesetzt wird, unter dem "Dach" jedoch Einbauraum für Funktionsleitungen geschaffen ist.

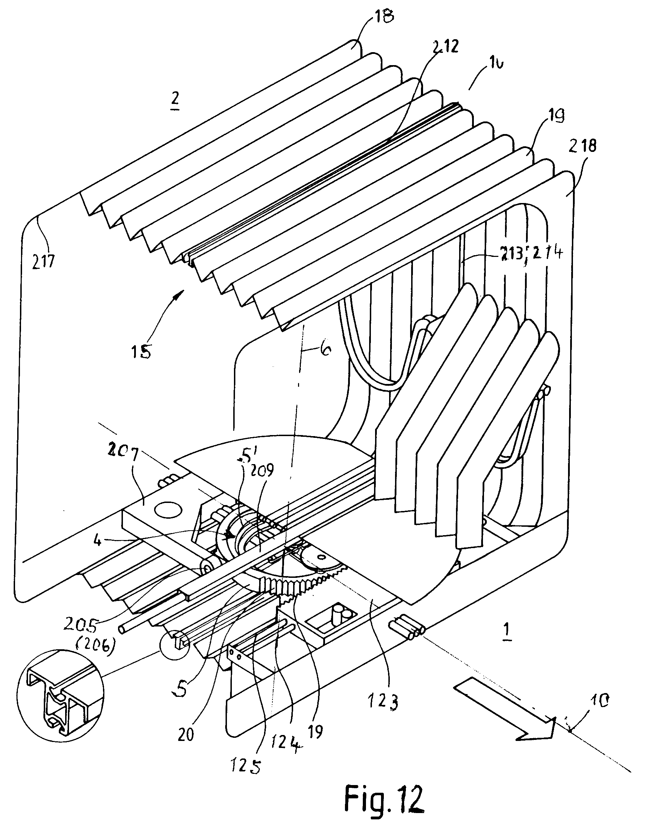

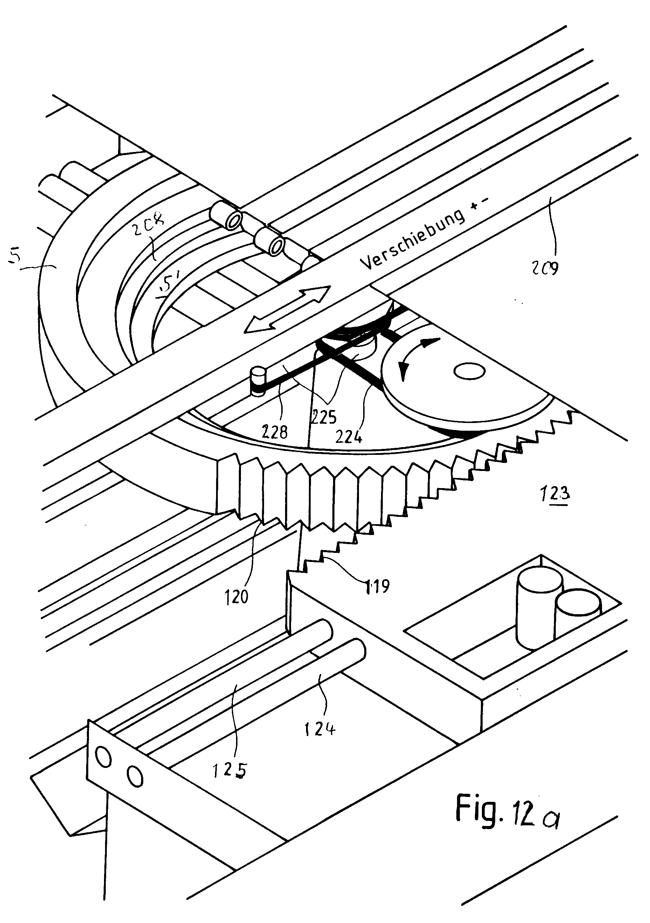

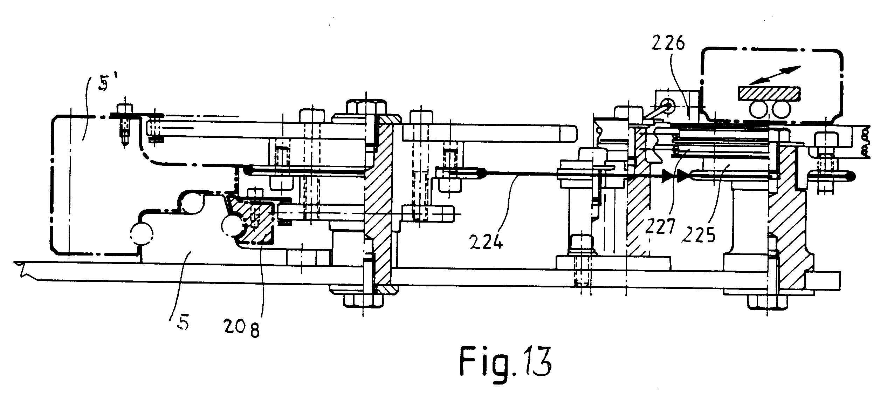

Wird die Lösung gemäß Fig. 7 bei einem Drehkranzgelenk mit drei Drehringen angewendet, so ist die Schiene 42 vorzugsweise statt direkt dem hinteren Fahrzeug zugeordnet zu sein, vorzugsweise dem dritten Drehring zugeordnet, der zwischen dem dem Vorderwagen und dem dem Hinterwagen zugeordneten Drehring angeordnet ist, was noch im einzelnen unter Bezugnahme auf Fig. 12,12a,13 erläutert wird.

Fig. 8 bis 11 dienen insbesondere der Erläuterung einer anderen Art der elastischen Zuordnung eines der Drehkränze des Drehkranzgelenkes zu einem der beiden Teilfahrzeuge, wobei es sich bei dem Drehkranz um den inneren, unteren Drehkranz 5' und bei dem Teilfahrzeug um den Vorderwagen 1 eines Gelenkomnibusses handelt. Die Hauptfahrtrichtung des Gelenkomnibusses ist wiederum durch den Pfeil 3 gekennzeichnet. Die Längsachse bzw. Wankachse des Gelenkfahrzeuges ist mit 10, die vertikale oder Knickachse, um die die beiden Teilfahrzeuge relativ zueinander in einer horizontalen Ebene Knickbewegungen ausführen können, ist mit 6 gekennzeichnet und die horizontale Querachse bzw. Nickachse schließlich, um die die beiden Teilfahrzeuge relativ zueinander Nickbewegungen ausführen können, ist mit 9 gekennzeichnet. Ersichtlich schneidet sowohl die Knickachse 6 als auch die Nickachse 9 die Längs- oder Wankachse 10, wobei jedoch in der Fahrtrichtung 3 die Nickachse 9 vor der Knickachse 6 liegt. Symmetrisch zum Schnittpunkt 107 zwischen Wankachse 10 und Knickachse 6 ist das Drehkranzgelenk 4 angeordnet, das als wesentliche Bauteile den äußeren, oberen Drehkranz 5 und den inneren, unteren Drehkranz 5' aufweist. Auf einem Teil seines Außenumfangs ist der obere, äußere Drehkranz 5 vom bogen- oder gabelförmigen einen Ende der steifen Traverse 8 umgriffen, womit dieser Teil des Außenumfangs des Drehkranzes 5 als der dem Hinterwagen 2 zugewandte Umfangsbereich ausgewiesen ist. Entsprechend ist die Basis 113 der steifen Traverse 8 der vorderen Stirnseite des Hinterwagens 2 zugeordnet und zwar insbesondere einem Bodenrahmen des Hinterwagens 2. Der äußere, obere Drehkranz 5 ist durch Materialauswahl und Formgebung in sich biege- und verwindungssteif, die Traverse 8 ist ebenfalls durch Formgebung und Materialauswahl entsprechend biege- und verwindungssteif und die Traverse 8 ist sowohl mit dem Drehkranz 5 als auch mit dem Hinterwagen 2 starr verbunden, so daß, unter der selbstverständlichen Voraussetzung, daß der Hinterwagen eine starre Röhre bildet bzw. das Untergestell des Hinterwagens biege- und verwindungssteif ist, der Hinterwagen 2 unter Einschluß des oberen, äußeren Drehkranzes 5 eine biege- und verwindungssteife Einheit bildet. Die Verbindung zwischen der Traverse 8 und dem Hinterwagen 2 soll lösbar sein, weshalb die Traverse 8 an dem dem Hinterwagen zugekehrten Ende mit zwei relativ breiten Füßen ausgebildet ist, die an ihren freien, d.h. dem Hinterwagen zuzuordnenden Enden mit zwei relativ großflächigen vertikalen Platten 114,115 versehen sind, auf deren jeweiligen Umfang Schraubverbindungen 116 verteilt sind, mit denen die Traverse 8 am Hinterwagen 2 fest aber lösbar angeschraubt ist. Um die notwendige Steifigkeit mit möglichst wenig Material zu erhalten, ist die Traverse 8 als Gitterkonstruktion ausgebildet, die am einen Ende von den beiden Platten 114,115, am anderen Ende mit einer Sattelplatt 117 versehen ist, in der der Drehkranz 5 spiellos liegt, um, vorzugsweise ebenfalls mit Schraubverbindungen 118, mit der Traverse 8 verbunden zu sein.

Dem Teil des Außenumfangs des äußeren, oberen Drehkranzes 5, der nicht in der Traverse 8 gehalten ist, ist eine Stirnradverzahnung 119 zugeordnet, die mit einer entsprechenden Zahnstange 120 ein Getriebe bildet.

Der äußere obere Drehkranz 5 ist über Wälzkörper auf dem unteren, inneren Drehkranz 5' abgestützt, wobei die Wälzkörper die vertikalen Abstützkräfte des äußeren, oberen Drehkranzes 5 auf den inneren, unteren Drehkranz 5' übertragen und Relativbewegungen zwischen den beiden Drehkränzen um die vertikale Achse 6 des Drehkranzgelenks zulassen. Der innere, untere Drehkranz 5' ist auf einer Konsole 121 befestigt, die elastisch in Grenzen nachgiebig, was im einzelnen noch zu erläutern sein wird, mit dem hinteren Ende des Vorderwagens 1 verbunden ist.

Auch diese Ausbildung und Anordnung des Drehkranzgelenkes 4 geht davon aus, daß der Gelenkomnibus mit der allgemein üblichen Achsanordnung versehen ist, gemäß der der Vorderwagen 1 mit einer Achse bzw. Achsgruppe bzw. Räderpaaren an jedem seiner beiden Enden versehen ist, während der Hinterwagen 2 nur an seinem hinteren Ende mit einer Achse bzw. Achsgruppe bzw. entsprechenden Räderpaaren versehen ist und an seinem vorderen Ende in dem Drehkranzgelenk 4 auf dem hinteren Ende des Vorderwagens 1 "aufgesattelt" ist. Der Antrieb des Gelenkomnibusses ist im Zusammenhang mit der Erfindung ohne Belang. Von Bedeutung für die Funktion der nachfolgend zu beschreibenden Anordnung mit der Zahnstange 120 und der Stirnradverzahnung 119 ist lediglich, welche Achse bzw. Achsgruppe des Gelenkomnibusses angetrieben wird. Wird die einzige Achse bzw. Achsgruppe des Hinterwagens 2 angetrieben, so hat die Anordnung passiv stabilisierende und aktiv steuernde Funktion bezüglich des Knickwinkels, wird eine der beiden Achsen bzw. Achsgruppen des Vorderwagens 1 angetrieben, so hat die Anordnung lediglich passiv stabilisierende Funktion bezüglich des Knickwinkels zwischen beiden Teilfahrzeugen, was aber an sich bekannt und auch bei der Anordnung gemäß Fig. 1 bis 7 der Fall ist und deswegen nicht näher zu erläutern ist.

Auf der Konsole 121 ist ein oberer, offener Rahmen 122 aufgesetzt, in dem ein Gehäuse 123 gehalten ist, das an der dem Hinterwagen 2 zugekehrten Stirnseite die Zahnstange 120 trägt.

Das Gehäuse 123 umschließt eine Kolben-Zylinder-Einheit, in dem von dem Gehäuse ein, aus dem Grund, kleinvolumige Einheiten zu haben, vorzugsweise jedoch zwei parallele Zylinder umschlossen ist bzw. sind, in dem bzw. in denen ein Kolben bzw. jeweils ein Kolben zwei Fluidräume voneinander trennt derart, daß bei Verstellbewegungen zwischen Kolben und Zylinder bzw. Zylindern ein gedrosselter Fluidübergang vom einen zum anderen Fluidraum möglich ist, was zum Zwecke der Dämpfung der Knickbewegungen zwischen den beiden Teilfahrzeugen passiv, d.h. abhängig von den Knickbewegungen geschieht bzw. zur Steuerung dieser Knickbewegungen aktiv, d.h. zwangsweise nach einem vorgegebenen Programm geschieht.

Die Kolbenstangen 124,125 der vorzugsweise zwei Kolben sind axial verschiebbar aus dem Gehäuse 123 und dem Rahmen 122 herausgeführt und an jedem ihrer Enden mit paarweise mit einem gemeinsamen Joch 126 bzw. 127 versehen, mit denen die äußeren Kolbenstangenenden am Hinterwagen 2 zu befestigen sind (im einzelnen nicht dargestellt), so daß Verstellbewegungen zwischen Kolben bzw. Kolbenstangen und Zylindern bzw. Gehäuse möglich sind, womit Knickbewegungen zwischen beiden Teilfahrzeugen 1,2 um die vertikale Hoch- bzw. Knickachse 6 gedämpft bzw. gesteuert werden können und dabei mit dem Getriebe 119,120 eine Kraft- bzw. Verstellwegübersetzung zum Erhalt optimaler Betriebsbedingungen möglich ist.

Die Konsole 121 mit dem aufgesetzten inneren, unteren Drehkranz 5' ist nun wie folgt am Vorderwagen 1 gehalten.

Im Bereich der Fahrzeuglängsachse 10 und symmetrisch zu dieser ist ein Metall-Gummi-Metall-Hülsenlager 128 angeordnet, das die Außenhülse 129, die Innenhülse 130 und die zwischen starrer Außenhülse 129 und starrer Innenhülse 130 mit radialer Vorspannung eingesetzte Gummihülse 131 aufweist. Die Innenfläche der Außenhülse 129 und die Außenfläche der Innenhülse sind ballig bzw. tonnenförmig, wobei die Scheitellinie in der Längsachse 10 des Gelenkfahrzeugs liegt (Draufsicht) und die Flächen symmetrisch von der Scheitellinie zu den Hülsenenden symmetrisch tonnenförmig bzw. ballig abfallen, indem die Durchmesser entsprechend kleiner werden, so daß die zwischen beiden Flächen mit radialer Vorspannung eingesetzte Gummihülse 131 die Form eines Kugelabschnitts hat, deren Endflächen parallel zueinander und symmetrisch zur Scheitellinie der Außenhülse 129 bzw. der Fahrzeuglängsachse 10 liegen. An die Innenhülse 130 ist an jedem Ende ein mit einem Loch 132 versehener Zapfen 133 bzw. 134 angesetzt, während an die Außenhülse 129 eine mit Löchern 135 versehene Befestigungsplatte 136 angesetzt ist (Fig. 10). Mittels der Befestigungsplatte 136 und durch die Löcher 135 hindurchgeführte Schraubenverbindungen ist die Außenhülse 129 am einen der beiden Teilfahrzeuge 1,2, vorzugsweise am Vorderwagen 1 angeschraubt, während über die Zapfen 133,134 und durch deren Löcher 132 hindurchgeführte Schraubenverbindungen die Innenhülse 130 am anderen der beiden Teilfahrzeuge, vorzugsweise dem Hinterwagen 2 befestigt ist.

Demzufolge werden in diesem Lager 128 mit relativ geringem Spiel vertikal und in Fahrzeuglängsrichtung gerichtete Zug- und Druckkräfte übertragen, d.h. Brems- und Antriebskräfte sowie die Abstützlast (des Hinterwagens auf dem Vorderwagen) werden spielarm zwischen den beiden Teilfahrzeugen übertragen, indem bei der Übertragung solcher Kräfte die radial vorgespannte Gummihülse 131 druckverformt wird, wobei sie gegenüber solchen Kräften relativ hart ist. Wankbewegungen zwischen beiden Teilfahrzeugen werden dagegen durch das Lager 128 nur wenig beeinträchtigt, weil Wankkräfte die Längsachsen von Außenhülse 129 und Innenhülse 130 gegeneinander verstellen, dies in Richtung der Tonnenkontur der Gummihülse 131 geschieht und die Gummihülse 131 solchen Verformungen nur einen geringen Widerstand entgegensetzt, insoweit also relativ weich ist. Entsprechendes gilt bezüglich der Nickbewegungen zwischen den beiden Teilfahrzeugen, indem bei solchen Bewegungen die Gummihülse 131 in Umfangsrichtung verformt wird und insoweit ebenfalls relativ weich ist.

Bei diesem Lager kann selbstverständlich die Innenhülse 130 mit den seitlich angesetzten Zapfen 133,134 einstückiges Vollmaterial sein. Ebenso selbstverständlich ist die Außenfläche der Gummihülse 131 fest mit der Innenfläche der Außenhülse 129 und die Innenfläche der Gummihülse 131 fest mit der Außenfläche der Innenhülse 130 verbunden, beispielsweise verklebt, wenn nicht bereits die aufgebrachte Vorspannkraft ausreicht, um Relativbewegungen zwischen den einander zugeordneten Umfangsflächen von Gummihülse 131 und Außenhülse 129 einerseits und Gummihülse 131 und Innenhülse 130 andererseits zu verhindern.

Seitlich von dem Lager 128 und der Fahrzeuglängsachse 10 und symmetrisch zu diesen sind nun zwei bau- und funkttionsgleiche Lager 137,138 angeordnet, von denen deshalb nachfolgend nur ein Lager insbesondere unter Bezugnahme auf Fig. 9 beschrieben ist. Auch dabei handelt es sich um Metall-Gummi-Metall-Hülsenlager, wobei alle drei Lager 128,137,138 gleichachsig angeordnet sind und die Längsachsen der drei Lager die Nickachse 9 des Gelenkfahrzeugs bestimmen, um die die beiden Teilfahrzeuge 1,2 Nickbewegungen ausführen (können).

Die mit einer mit Löchern 139 versehenen Befestigungsplatte 140 versehene Außenhülse 141 umschließt einen Raum, in der die "Innenhülse" 142 und Gummielemente 143,144 angeordnet sind. Die "Innenhülse" ist hierbei ein Zapfen mit Vierkantquerschnitt, der mit seinen beiden Enden über die Enden der Außenhülse 141 hinausgeführt ist und im Bereich seiner beiden Enden je ein Loch 145 aufweist. Je eines der als Block ausgebildeten Gummielemente 143,144 ist zwischen der Innenfläche der Außenhülse 141 und einer der in Fahrzeuglängsrichtung parallel einander gegenüberliegenden Außenflächen des Zapfens 142 mit Vorspannung in Fahrzeuglängsrichtung angeordnet, wobei gegebenenfalls, d.h. bei insofern unzulänglicher Vorspannung, durch zusätzliche Mittel, beispielsweise Kleben, Relativbewegungen zwischen der einen Außenfläche der Gummiblöcke 143,144 und der Innenfläche der Außenhülse 141 einerseits und der anderen Außenfläche der Gummiblöcke 143,144 und der jeweiligen Außenfläche des Zapfens 142 andererseits verhindert werden. Mit Schraubenverbindungen, die durch die Löcher 139 in der Befestigungsplatte 140 hindurchgeführt sind, ist jedes der Metall-Gummi-Metall-Hülsenelemente 137,138 am Vorderwagen 1 und mit Schraubenverbindungen, die durch die Löcher 145 der Zapfen 142 hindurchgeführt sind, am Hinterwagen 2 bzw. dem Konsol 121 befestigt.

Demzufolge werden in den Lagern 137,138 mit relativ geringem Spiel in Fahrzeuglängsrichtung gerichtete Zug- und Druckkräfte übertragen, d.h. Brems- und Antriebskräfte, die zwischen beiden Teilfahrzeugen übertragen werden. Solche Kräfte bewirken eine Zug- bzw. Druckverformung der Gummiblöcke 137,138 und gegenüber Druckkräften sind die Gummiblöcke 137,138 relativ hart. Wankbewegungen zwischen beiden Teilfahrzeugen werden dagegen durch die Gummiblöcke 143,144 nur wenig beeinträchtigt, weil die Gummiblöcke bei Wankbewegungen schubverformt werden und bezüglich Schubverformungen relativ weich sind, wobei dieser Vorteil besonders dadurch zum Tragen kommt, daß die Lager 137,138 gegenüber der Wankachse 10 beabstandet sind. Nickbewegungen zwischen beiden Teilfahrzeugen schließlich führen zu Druckverformungen bzw. Zugverformungen lediglich in diagonal einander gegenüberliegenden Kantenbereichen des Gummiblockpaares 143,144 jedes der beiden Lager 137,138. Wegen der geringen, druckverformbaren Masse sind die Lager 137,138 Nickbewegungen gegenüber relativ weich, sie behindern Nickbewegungen nur unwesentlich, ergeben aber die zusätzliche Wirkung einer Anschlagdämpfung mit progressiver Kennung.

Schließlich ist auch bei dieser Anordnung gemäß der Erfindung noch der Mittelrahmen 16 eines Faltenbalges vorgesehen und zwar seitenverschieblich. Hierzu ist zwischen dem Mittelrahmen 16 und einem Flansch 147 des inneren, unteren Drehkranzes 5' ein Seilzug angeordnet, von dem eine Seilrolle 148 dargestellt ist, die um die vertikale Knickachse bzw. die Drehachse des Drehkranzgelenks 4, also die Achse 6 abhängig von den Bewegungen des Drehkranzgelenks drehbar ist und deren Drehbewegung in dem Seilzug in translatorische Bewegungen des Mittelrahmens umsetzbar sind.

Funktionskabel des Gelenkomnibusses können einerseits in einer zentralen Kabeldurchführung 149 unter dem Drehkranzgelenk 4 und andererseits in einer seitlichen Kabeldurchführung 150 des Mittelrahmens 16 geführt werden.

In der Konsequenz der vorstehenden Erläuterungen der Erfindung liegt deren Ausbildung gemäß Fig. 11. Bei dieser Ausbildung ist davon ausgegangen, daß auch bei einem solchen Gelenkfahrzeug Knickbewegungen zwischen beiden Teilfahrzeugen 1,2 um die vertikale Knickachse 6 und Nickbewegungen zwischen beiden Teilfahrzeugen 1,2 um die horizontale Nickachse 9, nicht aber Wankbewegungen um die Fahrzeuglängsachse 10 zulässig sein sollen. Für den Fall eines solchen Betriebsverhaltens sind zwei Lager 128a,128b, die in ihrem Aufbau dem Lager 128 gemäß Fig. 10 entsprechen, mit ihren Scheitellinien symmetrisch zur Fahrzeuglängsachse angeordnet. Sie unterbinden Relativbewegungen zwischen beiden Teilfahrzeugen um die Fahrzeuglängsachse 10 (Wankbewegungen) nahezu vollständig, während Knick- und Nickbewegungen unbeeinträchtigt möglich sind. Die beiden Lager 137,138 gemäß Fig. 9 entfallen dabei vorzugsweise, weil Längs- und vertikale Kräfte in den beiden Lagern 128a und 128b ausreichend aufgenommen werden.

Dies führt schließlich dazu, daß ein einziges Lager 128 gemäß Fig. 10 als Multifunktionslager ausgebildet werden kann, das insbesondere aufgrund der Materialbestimmung für die elastische Hülse 131 in der Lage ist, die Aufgaben der Lager 128,137,138 der Anordnung gemäß Fig. 8, wie sie vorstehend ausführlich erläutert sind, zu übernehmen, die sich aus der Übertragung der Zug- und Druckkräfte sowie der vertikalen Auflagekräfte ergeben und der Möglichkeit ableiten, Nick- und Knickbewegungen sowie Wankbewegungen zuzulassen, gegebenenfalls unter Verzicht auf die Möglichkeit der Wandbewegungen.

Eine besonders zweckmäßige Ausbildung der Erfindung für die Gewährleistung einer optimalen Einstellung des Mittelrahmens 16 des Faltenbalges 15 zwischen vorderem und hinterem Teilfahrzeug 1 bzw. 2 eines Gelenkfahrzeugs der vorbeschriebenen Art quer zur Längsachse 10 des Gelenkfahrzeugs, bei dem es sich wiederum vor allem um einen zum Verkehr auf der Straße bestimmten Gelenkomnibus handeln soll, wird nachfolgend anhand Fig. 12,12a,13 beschrieben.

Kernstück der Verbindung zwischen den beiden Teilfahrzeugen 1 und 2 des Gelenkomnibusses ist wiederum das Drehkranzgelank 4 mit den beiden Drehkränzen bzw. Drehringen 5 und 5'. Von den beiden Drehringen weist der äußere oder obere Drehring 5 zwei waagrechte, seitliche und achsgleiche Zapfen 205,206 auf, mit denen der äußere Drehring 5 in einer Gabel 207 gehalten ist, die starr dem vorderen Ende des hinteren der beiden Teilfahrzeuge 2 zugeordnet ist. Die Zapfen 205,206 sind drehbar in Augen an den freien Enden der Gabel 207 gehalten. Der innere oder untere Drehring 5' ist flächig und in biegesteifer Ausführung und Anordnung dem hinteren Ende des vorderen der beiden Teilfahrzeuge 1,2 zugeordnet. Dabei ist wiederum vorausgesetzt, daß das vordere Teilfahrzeug 1 eine Achse oder Achsgruppe bzw. Räderpaare bzw. Radpaargruppen an jedem seiner beiden Enden hat (Vorderachse, Hinterachse), während das hintere Teilfahrzeug 2 eine Achse oder Achsgruppe bzw. Räderpaar oder Räderpaargruppe lediglich an seinem hinteren Ende hat. Motor- und Getriebeanordnung sowie Bestimmung der angetriebenen Achse sind dagegen im Zusammenhang mit der Erfindung erneut ohne Bedeutung, hierauf soll deswegen nicht eingegangen werden außer mit dem Hinweis, daß es sich bei dem Gelenkomnibus bevorzugt um einen sogenannten Pusher handeln soll, bei dem der Motor-Getriebe-Block im Heck des hinteren Teilfahrzeugs angeordnet ist und die hintere oder mittlere Achse des Gelenkfahrzeugs angetrieben wird.

Den beiden vorgenannten Drehringen 5,5' ist ein dritter Drehring 208 zugeordnet, dessen jeweiliger Schwenkwinkel halb so groß ist wie der Schwenkwinkel zwischen den beiden Drehringen 5,5', wenn zwischen den Drehringen 5,5' der volle Schwenkwinkel vorliegt, hat der dritte Drehring 208 den halben Schwenkwinkel, der Schwenkwinkel zwischen den Drehringen 5,5' ist zum Schwenkwinkel des dritten Drehrings 208 im Verhältnis 2:1 übersetzt.

Der Dämpfung oder Steuerung der Relativbewegungen zwischen beiden Teilfahrzeugen 1,2 um die Hochachse 6 des Drehkranzgelenks 4 dient ein entsprechend ausgelegtes Getriebe, das die dem vorderen Teilfahrzeug und damit dem inneren oder unteren Drehring 5' zugeordnete Zahnstange 120 und die dem äußeren, oberen Drehring 5 zugeordnete Stirnradverzahnung 119 aufweist. Die Zahnstange 120 ist dem Gehäuse 123 zugeordnet, das die bereits beschriebene Dämpfungseinrichtung zur Dämpfung und/oder gegebenenfalls Steuerung der Schwenkbewegungen zwischen den beiden Teilfahrzeugen 1,2 um die Hochachse 6 des Drehkranzgelenks 4 aufnimmt. Diese Dämpfungs- bzw. Steuereinheit besteht aus zwei parallelen Kolben-Zylinder-Einheiten, deren Zylinder in das Gehäuse 123 integriert und damit dem einen der Teilfahrzeuge 1,2 zugeordnet sind, während die Kolbenstangen 124,125 der in den Zylindern steuernd zwangsweise oder drosselnd dämpfend verstellbaren Kolben aus dem Gehäuse 123 herausgeführt und mit ihren äußeren Enden am anderen der beiden Teilfahrzeuge 1,2 angeschlossen sind.

Dem dritten Drehring 208 ist ein Wiegebalken 109 zugeordnet, der den unteren Schenkel des portalartigen Mittelrahmens 16 des Faltenbalgs 15 bildet. Der Mittelrahmen 16 besteht aus dem erwähnten Wiegebalken 209 als seinem unteren Schenkel, dem dazu parallelen oberen Schenkel 212 und den beiden vertikalen seitlichen Schenkeln 213,214. Der Mittelrahmen bildet demzufolge ein Rechteck, das sich bei normaler Geradeausfahrt des Gelenkfahrzeugs in der vertikalen Querebene in der Mitte zwischen den beiden Teilfahrzeugen befindet. An dem Mittelrahmen 16 sind die beiden Hälften 18,19 des Faltenbalgs 15 angeschlossen, so daß mittels des Mittelrahmens 16 die beiden Faltenbalghälften 18,19 zum Faltenbalg 15 verbunden sind, der an seinen beiden äußeren Enden mit Endrahmen 217,218 am jeweiligen der beiden Teilfahrzeuge befestigt ist. Dies ist lediglich eine etwas ausführlichere Beschreibung der Anordnung, wie sie insoweit auch in Fig. 1 bis 11 vorgesehen ist.

Mit dem Übersetzungsverhältnis 2:1 zwischen den Schwenkbewegungen des äußeren Drehrings 5 und des dritten Drehrings 208 ist der mit dem dritten Drehring 208 verbundene Mittelrahmen 16 auf der Halbierenden des Schwenkwinkels zwischen den Bewegungen des äußeren und des inneren Drehrings 5,5' bzw. des Winkels gehalten, den die beiden einander zugekehrten Stirnseiten der beiden Teilfahrzeuge 1,2 einschliessen.

Die Verbindung zwischen dem Mittelrahmen 16 und dem dritten Drehring 208 erfolgt demzufolge drehfest, d.h. der Mittelrahmen macht alle Schwenkbewegungen des dritten Drehrings 208 um die Hochachse 6 des Drehkranzgelenks 4 mit.

Darüber hinaus ist aber der Mittelrahmen 16 in Durchmesserrichtung verschieblich dem dritten Drehring 208 zugeordnet.

Die drehfeste, aber seitenverschiebliche Verbindung zwischen Wiegebalken 209 des Mittelrahmens 16 und drittem Drehring 208 könnte dadurch erfolgen, daß der Wiegebalken einen oder mehrere Längsschlitze aufweist, mit denen der Wiegebalken über vertikale Bolzen des dritten Drehrings 208 greift.

Erfindungsgemäß erfolgt nun die demzufolge mögliche Querverschiebung zwischen Drehkranzgelenk 4 und Mittelrahmen 16 unter Einschaltung eines ersten Kettentriebs 224. Durch diesen Kettentrieb wird die Drehbewegung der Drehringe relativ zueinander auf eine vertikale Welle 225 in der Gelenkmitte übertragen. Auf dieser unter der Einwirkung des Kettentriebes 224 drehbaren Welle 225 sind axial gegeneinander versetzt zwei Seilrollen 226,227 drehfest angeordnet und von einer dieser Seilrollen läuft ein Seilzug 228 in Richtung auf das eine Ende des Wiegebalkens und von der anderen der beiden Seilrollen läuft ein Seilzug in Richtung auf das andere Ende des Wiegebalkens 209, so daß mit jeweils dem einen dieser beiden Seilzüge die Verschiebung des Wiegebalkens und damit des Mittelrahmens des Faltenbalgs nach rechts, mit dem anderen dieser beiden Seilzüge die Verschiebung des Wiegebalkens und damit des Mittelrahmens des Faltenbalgs nach links bewirkt wird.

Damit ermöglicht die Erfindung insoweit in einfacher, betriebssicherer Weise die Ansteuerung des Mittelrahmens sowohl auf die Winkelhalbierende als auch auf die optimale Einstellung des Faltenbalgs quer zur Fahrzeuglängsachse und zum Mittelpunkt des Drehkranzgelenks.

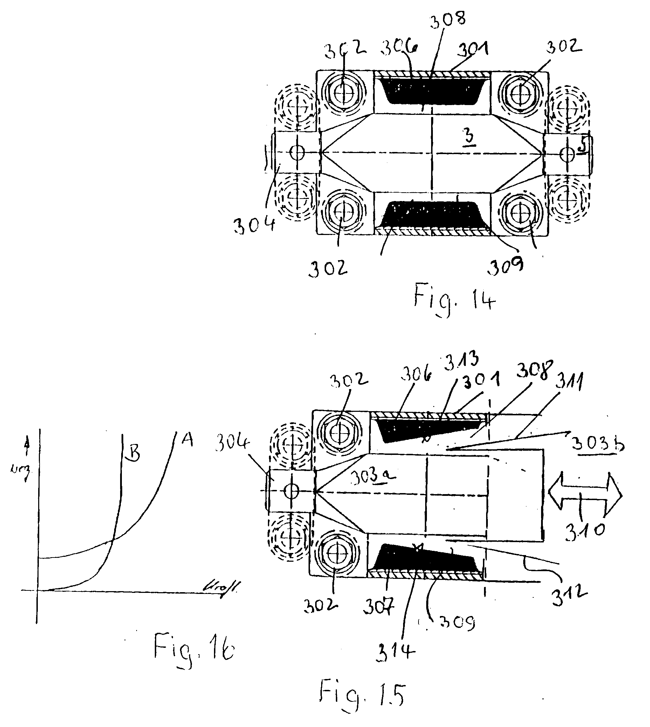

Es kann nun nicht die Sorge ausgeschlossen werden, daß bei den bisher beschriebenen Lösungen die Fahreigenschaften durch zu weiche Gelenke insbesondere ein zu torsionsweiches Gelenk negativ beeinflußt werden. Wünschenswert kann es deshalb sein, einen Anschlag bzw. Anschläge vorzusehen, die die Relativbewegungen zwischen beiden Teilfahrzeugen begrenzen und zwar durch elastische Puffer, deren Elastizität entsprechend sich verändernden Betriebsverhältnissen insbesondere ihrerseits wieder einstellbar ist, wobei es sich insbesondere wieder um Wankbewegungen zwischen den beiden Teilfahrzeugen handelt. In der weiteren Ausbildung schlägt deshalb die Erfindung eine Möglichkeit vor, wie die Federkennlinie solcher Puffer zu beeinflussen ist und es wird hierfür eine praktisch gut brauchbare, baulich einfache Möglichkeit aufgezeigt und nachfolgend anhand Fig. 14 bis 16 beschrieben.

Gemäß Fig. 14,15 ist ein Gehäuse 301 einem der beiden Fahrzeugglieder 1,2 des Gelenkomnibusses zugeordnet, wozu Befestigungsschrauben 302 dienen, ohne daß das Fahrzeugglied selbst dargestellt ist. Das Gehäuse 301 ist hülsenförmig und umgibt ein Innenteil 303, das an beiden Enden mit Zapfen bzw. Zungen 304,305 aus dem Gehäuse 301 herausgeführt ist und mit diesen Zapfen dem zweiten der beiden Fahrzeugglieder 1,2 des Gelenkomnibusses zugeordnet ist. Auf der Innenseite des Gehäuses ist eine Gummifeder mit den beiden einander gegenüberliegenden Abschnitten 306,307 befestigt. Zwischen den einander zugekehrten Außenflächen der beiden Gummifederabschnitte 306,307 und den zugeordneten Flächen des Innenteiles 303 befindet sich je ein Luftspaltabschnitt 308,309. Bei der Lösung nach Fig. 14 haben beide Luftspaltabschnitte im normalen Betriebszustand eine gleichbleibende Breite, d.h. die einander zugekehrten Flächen jedes Luftfederabschnitts 306,307 und die zugehörigen Flächen des Innenteiles 303 verlaufen parallel zueinander. Die Achsen von Gehäuse 301 und Innenteil 303 verlaufen in der Darstellung von Fig. 14 deckungsgleich zueinander. Sind zwischen den beiden Teilfahrzeugen 1,2 insbesondere unerwünscht hohe Wankbewegungen zu erwarten, so stellen sich Gehäuse 301 und Innenteil 303 schräg zueinander, eines dieser Bauteile bleibt in der Ausgangsstellung, während sich das andere der beiden Bauteile dem erstgenannten Bauteil gegenüber schräg stellt, so daß die diagonal einander gegenüberliegenden Endbereiche der Luftspaltabschnitte schmaler bzw. breiter werden, wobei in den Bereichen der schmaler werdenden Luftspaltabschnitte schließlich das Innenteil 303 an den Gummifederabschnitten in Anlage kommen, bei weiteren Wankbewegungen die relevanten Gummifederabschnitte schließlich komprimiert werden, die weiteren Relativbewegungen und damit die Wankbewegungen gedämpft werden und dabei eine Rückstellkraft aufgebaut wird. Die Kennlinie der Anordnung gemäß Fig. 14 ist die Kurve A in Fig. 16.

Bei der Anordnung nach Fig. 15 ist das Innenteil 303 zweiteilig und die beiden Teile 303a und 303b sind in beiden Richtungen des Doppelpfeiles 310 gegeneinander verstellbar. Der Innenteilabschnitt 303a ist wie bei der Lösung gemäß Fig. 14 fest dem einen der beiden Fahrzeugglieder zugeordnet. Der Innenteilabschnitt 303b greift klauenartig über den Innenteilabschnitt 303a und hat nach außen divergierende Flächen 311,312. Entsprechend divergierend jedoch mit entgegengesetzt gerichteter Neigung sind die den Flächen 311, 312 zugekehrten Flächen 313,314 der Gummifederabschnitte, wobei gegebenenfalls eine divergierende Ausbildung der Flächen 311,312 des Innenteilabschnittes oder der Flächen 313,314 der Gummifederabschnitte 306,307 zu befriedigenden Ergebnissen führt. Das Verstellen des Innenteilabschnittes 303b in einer der Richtungen des Doppelpfeiles 310 führt zu einer Veränderung der Luftspaltbreite und bei grundsätzlich gleicher Funktion wie die der Ausbildung gemäß Fig. 14 kann eine Federkennlinie gemäß der Kurve B in Fig. 16 erzielt werden, wobei durch Verstellen des Innenteilabschnittes 303b die grundsätzlich gleiche Federkennlinie unterschiedliche Lagen im Koordinatenfeld haben kann, das durch die Achsen für Kraft und Weg begrenzt ist.

Die Verstellkraft für den Innenteilabschnitt 303b kann eine kontinuierliche Verstellung oder eine stufenweise Verstellung des Innenteilabschnittes 303b bewirken. Sie kann manuell oder maschinell gesteuert werden, wobei die maschinelle Steuerung elektromechanisch, z.B. mit einem Elektromagneten, hydraulisch oder pneumatisch mit Stellzylinder bewirkt werden kann.

## Patentansprüche

1. Gelenkverbindung zwischen zwei Fahrzeugen mit einem Drehkranzgelenk (4) mit zwei Drehkränzen (5,5'), von denen je einer einem der beiden Fahrzeuge (1,2) zugeordnet ist und die um eine vertikale Knickachse (6) gegeneinander verdrehbar sind, um Knickbewegungen zwischen beiden Fahrzeugen möglich zu machen, wobei elastische Teile, vorzugsweise Gummielemente (11,13,36-38,128,137,138), weitere Bewegungen zwischen beiden Fahrzeugen ermöglichen, **dadurch gekennzeichnet,** daß der eine der beiden Drehkränze (5 bzw. 5') mit dem ihm zugehörigen Fahrzeug (1 bzw. 2) vorzugsweise starr verbunden ist, während der andere der beiden Drehkränze mit dem ihm zugehörigen Fahrzeug über die elastischen Teile verbunden ist, die wie folgt ausgelegt bzw. angeordnet sind:
(a) in Fahrzeuglängsrichtung (3) gerichtete Kräfte, also insbesondere Brems- und Antriebskräfte werden zwischen beiden Fahrzeugen (1,2) unter Zug- bzw. Druckbeanspruchung elastischer Elemente übertragen, die unter dem Einfluß von Druckkräften relativ wenig elastisch verformbar sind,
(b) Nickbewegungen zwischen beiden Fahrzeugen (1,2) um eine horizontal in Fahrzeugquerrichtung gerichtete Nickachse (9) führen zu Zug- und Druckverformungen von elastisch verformbaren Elementen,
(c) gegebenenfalls werden Wankbewegungen zwischen beiden Fahrzeugen (1,2) um eine horizontal in Fahrzeuglängsrichtung gerichtete Wankachse (10) als Schubverformungen von elastisch verformbaren Elementen aufgenommen,
(d) vertikale Abstützkräfte zwischen beiden Fahrzeugen (1,2), führen zumindest überwiegend zur Druckverformung elastisch verformbarer Elemente, die unter dem Einfluß von Druckkräften relativ wenig verformbar sind.

2. Gelenkverbindung nach Anspruch 1, **gekennzeichnet** durch ein elastisches Element (11) zwischen einem der Drehringe bzw. Drehkränze (5 bzw. 5') und dem ihm zugehörigen Fahrzeug, das in Fahrzeuglängsrichtung (3) zug- bzw. druckverformbar ist und das in vertikaler und Fahrzeugquerrichtung schubverformbar ist.

3. Gelenkverbindung nach Anspruch 1, **gekennzeichnet** durch ein elastisches Element bzw. eine Gruppe elastischer Elemente (34,35), die in vertikaler Richtung druckverformbar, zumindest aber überwiegend druckverformbar, in Fahrzeuglängsrichtung (3) schubverformbar und in Fahrzeugquerrichtung schubverformbar oder schub- und druckverformbar sind und **gekennzeichnet** durch eine Gruppe elastischer Elemente (37,38), die in Fahrzeuglängsrichtung druckverformbar, in Fahrzeugquerrichtung und in vertikaler Richtung schubverformbar sind.

4. Gelenkverbindung nach Anspruch 3, **dadurch gekennzeichnet,** daß das erste elastische Element bzw. die Gruppe erster elastischer Elemente (34,35) symmetrisch zur lotrechten Fahrzeuglängsmittelebene von dieser durchdrungen bzw. unmittelbar zu beiden Seiten dieser lotrechten Fahrzeuglängsmittelebene angeordnet sind, während die elastischen Elemente der Gruppe zweiter elastischer Elemente (37,38) symmetrisch zur lotrechten Fahrzeuglängsmittelebene zu beiden Seiten des ersten elastischen Elements bzw. der Gruppe erster elastischer Elemente (34,35) angeordnet sind.

5. Gelenkverbindung nach Anspruch 4, **dadurch gekennzeichnet,** daß eine Gruppe erster elastischer Teile (34,35) von zwei Metall-Gummi-Metallelementen gebildet wird.

6. Gelenkverbindung nach Anspruch 4 oder 5, **dadurch gekennzeichnet,** daß eine Gruppe zweiter elastischer Elemente (37,38) von je zwei Metall-Gummi-Metallelementen zu beiden Seiten der lotrechten Fahrzeuglängsmittelebene und des ersten elastischen Elements bzw. der Gruppe erster elastischer Elemente (34,35) gebildet wird.

7. Gelenkverbindung nach Anspruch 5 oder 6, **dadurch gekennzeichnet,** daß Metall-Gummi-Metallelemente der Gruppe erster elastischer Teile bzw. ein erstes Metall-Gummi-Element mit den Metallplatten in Fahrzeuglängsrichtung aufeinanderfolgend angeodnet sind, denen bzw. dem gegenüber gleiche Metall-Gummi-Metallelemente der zweiten Gruppe elastischer Teile um 90° gedreht angeordnet sind.

8. Gelenkverbindung nach einem der Ansprüche 5 bis 7**, dadurch gekennzeichnet,** daß zwei Metall-Gummi-Metallelemente der ersten Gruppe elastischer Teile (34,35) spitzdachförmig angeordnet sind derart, daß der First des Spitzdaches in der lotrechten Fahrzeuglängsmittelebene liegt.

9. Gelenkverbindung nach einem der Ansprüche 5 bis 8, **dadurch gekennzeichnet,** daß die Gummiteile der Metall-Gummi-Metallelemente durch eine feste mittlere Platte (39) unterteilt sind, daß die mittlere Platte jedes Metall-Gummi-Elementes der ersten Gruppe im wesentlichen parallel zu den Außenplatten verläuft, wobei die Außenplatten mit dem einen der beiden Fahrzeuge bzw. dem Gelenkteil, die mittlere Platte mit dem anderen Gelenkteil bzw. dem anderen Fahrzeug verbunden ist.

10. Gelenkverbindung nach einem der Ansprüche 1 bis 9, **dadurch gekennzeichnet,** daß die Zuordnung der elastischen Teile zum äußeren Drehkranz des Drehkranzgelenks über einen an sich bekannten, jedoch starr am äußeren Drehkranz befestigten gabelförmigen Bügel erfolgt, dessen Zinken dem Drehkranz zugeordnet sind und dessen dem Drehkranz abgekehrte Basis über die elastischen Teile dem Fahrzeug zugeordnet ist.

11. Gelenkverbindung nach einem der Ansprüche 1 bis 10, **dadurch gekennzeichnet,** daß die beiden Fahrzeuge Vor- und Nachläufer eines Gelenkomnibusses sind.

12. Gelenkverbindung nach einem der Ansprüche 1 bis 11, **gekennzeichnet** durch ihre Anordnung oberhalb des Bodens eines Faltenbalges (15), der als geschlossene Röhre zwischen beiden Fahrzeugen (1,2) angeordnet und mit einem Endrahmen dem einen, mit einem zweiten Endrahmen dem anderen der beiden Fahrzeuge zugeordnet ist.

13. Gelenkverbindung nach Anspruch 12, **dadurch gekennzeichnet,** daß der Faltenbalg (15) einen mittleren Rahmen (16) im Bereich der Mitte zwischen beiden Endrahmen aufweist, der dem Gelenk (4) seitenverschieblich aber winkelsteif zugeordnet ist.

14. Gelenkverbindung nach Anspruch 12, **dadurch gekennzeichnet,** daß die Faltenhöhe des Faltenbalgs (15) im Bodenbereich niedriger als im Bereich der Seitenwände und des Daches ist.

15. Gelenkverbindung nach einem der Ansprüche 1 bis 14, **dadurch gekennzeichnet,** daß Vertikalbewegungen zwischen den beiden Fahrzeugen (1,2) im Bereich der Gelenkverbindung (4) oder Kippbewegungen der Gelenkverbindung um eine horizontale Querachse zwangsweise gesteuert werden.

16. Gelenkverbindung nach einem der Ansprüche 1 bis 15, **dadurch gekennzeichnet,** daß der eine Drehkranz (5) am einen Fahrzeug (2), der andere Drehkranz (5') am anderen Fahrzeug (1) in gleicher Weise über elastische Teile (11) angeschlossen ist.

17. Gelenkverbindung nach einem der Ansprüche 1 bis 16, **gekennzeichnet** durch die Zuordnung einer Übergangsplatte (14), die am einen der beiden Fahrzeuge (1,2) in einer horizontalen Mittellage gehalten, nach oben und unten schwenkbar gelagert ist, und sich frei aus Kragend über das andere der beiden Teilfahrzeuge erstreckt.

18. Gelenkverbindung nach Anspruch 17, **dadurch gekennzeichnet,** daß die Übergangsplatte horizontal verschiebbar auf dem zweiten der Teilfahrzeuge abgestützt ist.

19. Gelenkverbindung nach Anspruch 17 oder 18, **dadurch gekennzeichnet,** daß die Lagerung der Übergangsplatte am einen der beiden Fahrzeuge mittels eines Gummilagers erfolgt, das in Fahrzeuglängsrichtung druckverformbar, in vertikaler und Fahrzeugquerrichtung schubverformbar ist.

20. Gelenkverbindung nach einem der Ansprüche 17 bis 19, **dadurch gekennzeichnet,** daß die Übergangsplatte am Vorderwagen gelenkig gelagert ist.

21. Gelenkverbindung nach Anspruch 1 mit einem dritten Drehkranz bzw. Drehring zwischen den beiden ersten Drehkränzen bzw. Drehringen, einem Faltenbalg, der die Drehkranzverbindung umgibt und einen Mittelbügel zwischen den beiden Fahrzeugen aufweist und mit einer Vorrichtung zur Steuerung von Bewegungen des Mittelbügels in Abhängigkeit von Relativbewegungen der Fahrzeuge zueinander, **dadurch gekennzeichnet,** daß die Drehbewegungen des dritten Drehkranzes bzw. Drehrings mittels eines Untersetzungsgetriebes auf der Hälfte der Drehbewegungen des äußeren und des inneren Kranzes bzw. Ringes gehalten sind.

22. Gelenkverbindung nach Anspruch 21, **dadurch gekennzeichnet,** daß der Mittelbügel ein ringsumlaufender, geschlossener Rechteckrahmen ist, der mit seinem unteren, als Wiegebalken ausgebildeten Rahmenteil drehfest aber in Durchmesserrichtung verschieblich gelagert ist und zwar derart, daß der Mittelbügel in der vertikalen Quermittelebene zwischen beiden Fahrzeugen liegt, wenn die beiden Fahrzeuge sich in der Geradeausfahrtstellung befinden.

23. Gelenkverbindung nach Anspruch 21 oder 22, **dadurch gekennzeichnet,** daß zwischen Außen- und Innenring ein Ketten- oder Seiltrieb angeordnet ist, der die Relativbewegungen zwischen Außen- und Innenring aufnimmt und auf eine vertikale Welle in Gelenkmitte überträgt.

24. Gelenkverbindung nach den Ansprüchen 22 und 23, **dadurch gekennzeichnet,** daß auf der Welle drehfest je eine Rolle zweier Ketten- bzw. Seilzüge befestigt ist, von denen jeder über ein von zwei wiegebalkenfesten zweiten Rollen geführt ist, wobei der eine dieser Ketten- bzw. Seilzüge in Richtung auf das eine, der andere der beiden Ketten- bzw. Seilzüge in Richtung auf das andere der beiden Enden des Wiegebalkens verläuft, d.h. die eine der beiden zweiten Rollen näher dem einen, die andere näher dem anderen Wiegebalkenende drehbar aber ortsfest dem Wiegebalken zugeordnet ist.

25. Gelenkverbindung nach einem der Ansprüche 1 bis 24, **dadurch gekennzeichnet,** daß einem Federelement, das funktionell dem Drehgelenk zwischen beiden Teilfahrzeugen derart zugeordnet ist, daß es Nick- und/oder Torsionsbewegungen zwischen den beiden Teilfahrzeugen ermöglicht, eine Baueinheit mit Mitteln zum Verändern der Federkennlinie des Federelementes zugeordnet ist.

26. Gelenkverbindung nach Anspruch 25, **dadurch gekennzeichnet,** daß sich zwischen Teilen bzw. Bereichen (306, 307) des Federelementes und einem feststehenden Bauteil (303) ein Luftspalt (308,309) befindet.

27. Gelenkverbindung nach Anspruch 26**, gekennzeichnet** durch einen Luftspalt (308a) veränderbaren Querschnitts.

28. Gelenkverbindung nach einem der Ansprüche 25 bis 27, **dadurch gekennzeichnet,** daß das Federelement eine Feder (308,309) aus Gummi oder einem Gummi entsprechendem Kunststoffmaterial ist.

29. Gelenkverbindung nach einem der Ansprüche 25 bis 28, **dadurch gekennzeichnet,** daß das Federelement (306,307) zwischen einem fest dem einen der beiden Teilfahrzeuge zugeordneten Bauteil (301) in fester Zuordnung zu diesem Bauteil und unter Einhalt eines Luftspaltes (308,309) einem Bauteil (303) des anderen der beiden Teilfahrzeuge angeordnet ist, wobei dieses andere Bauteil (303) zur Veränderung des Querschnitts des Luftspaltes verstellbar ist.

30. Gelenkverbindung nach Anspruch 29, **dadurch gekennzeichnet,** daß das andere, verstellbare Bauteil (303) zwei relativ gegeneinander verschiebbare Abschnitte (303a, 303b) im Bereich des Luftspaltes (308,309) bzw. Federelementes (306,307) aufweist.

31. Gelenkverbindung nach Anspruch 30, **dadurch gekennzeichnet,** daß ein erster der Bauteilabschnitte unverstellbar dem anderen zweiten der beiden Teilfahrzeuge zugeordnet ist und ein zweiter der Bauteilabschnitte klauenartig den ersten Bauteilabschnitt (303a) längsverschieblich übergreift und auf der Außenseite (311,312) keilförmig ausgebildet ist.

32. Gelenkverbindung nach Anspruch 31, **dadurch gekennzeichnet,** daß die dem zweiten Bauteilabschnitt 323b) zugekehrte Fläche (313,314) des als Gummiblock ausgebildeten Federelementes (306,307) keilförmig ausgebildet ist, wobei die Keilneigung der Keilneigung des zweiten Bauteilabschnitts entgegengesetzt ist.

33. Gelenkverbindung nach einem der Ansprüche 1 bis 7, **dadurch gekennzeichnet,** daß die elastische Verbindung zwischen innerem, unteren Drehkranz (5') und ihm zugeordneten Teilfahrzeug (1) drei hülsenförmige Metall-Gummi-Metall-Hülsenelemente (128,137,138) aufweist, deren gemeinsame Drehachse die Nickachse (9) des Gelenkfahrzeugs definiert, von denen ein erstes, mittleres Metall-Gummi-Metall-Hülsenelement (128) mit seiner Längsachse die Fahrzeuglängsachse (10) schneidend angeordnet ist und zwischen seiner mit dem einen der beiden Teilfahrzeuge verbundener Außenhülse (129) und seiner mit dem anderen der beiden Teilfahrzeuge verbundenen Innenhülse (130) sich eine radial vorgespannte, mit Außen- und Innenhülse fest verbundene Gummihülse (131) befindet, während zweites und drittes Metall-Gummi-Metall-Hülsenelement (137,138) seitlich vom ersten Metall-Gummi-Metall-Hülsenelement (128) in symmetrischen Anordnung zur Fahrzeugslängsachse (10) angeordnet sind und bei jedem von zweitem und drittem Metall-Gummi-Metall-Hülsenelement zwischen mit einem der beiden Teilfahrzeuge verbundener Innenhülse (142) und seiner mit dem anderen der beiden Teilfahrzeuge verbundenen Außenhülse (141) zwei in Fahrzeuglängsrlchtung einander gegenüberliegende Gummiblöcke (143,143) derart angeordnet sind, daß bei der Übertragung von in Fahrzeuglängsrichtung (3) gerichteten Zug- und Druckkräften zwischen beiden Teilfahrzeugen der eine Gummiblock druck-, der andere Gummiblock zugverformbar ist, daß bei Wankbewegungen zwischen den Teilfahrzeugen beide Gummiblöcke in zwei zueinander senkrechten Richtungen schubverformbar sind und daß bei Nickbewegungen zwischen beiden Teilfahrzeugen (1,2) die beiden einen in Fahrzeuglängsrichtung diagonal einander gegenüberliegenden Kantenbereiche beider Gummiblöcke druckverformbar, die beiden anderen in Fahrzeuglängsrichtung diagonal einander gegenüberliegenden Kantenbereiche beider Gummiblöcke zugverformbar sind.

34. Gelenkverbindung nach Anspruch 33, **dadurch gekennzeichnet,** daß die Außenhülsen (129,341) aller drei Metall-Gummi-Metall-Hülsenelemente (128,137,138) mit dem einen (1), die Innenhülsen (130,142) aller drei Metall-Gummi-Metall-Hülsenelemente mit dem anderen Teilfahrzeug (2) verbunden sind.

35. Gelenkverbindung nach Anspruch 34, **dadurch gekennzeichnet,** daß der äußere, obere Drehkranz (5) des Drehkranzgelenks (4) über einen steifen Bügel (8) starr am Untergestell des ihm zugeordneten Teilfahrzeugs (2) befestigt ist.

36. Gelenkverbindung nach Anspruch 35, **dadurch gekennzeichnet,** daß die starre Verbindung zwischen steifem Bügel (8) und Untergestell des ihm zugeordneten Teilfahrzeugs (1) lösbar ist.

37. Gelenkverbindung Verbindung nach Anspruch 35 oder 36, **dadurch gekennzeichnet,** daß der äußere Drehkranz (5) des Drehkranzgelenkes (4) verwindungssteif ist und auf einem Teil seines Umfangs von dem Bügel (8) umfaßt wird, auf einem anderen Teil seines Umfangs eine Verzahnung (119) als Teil eines Getriebes (119,120) versehen ist, dessen Gegenverzahnung über eine Einrichtung (123-125) dem einen Teilfahrzeug (1) zugeordnet ist, die Knickbewegungen zwischen beiden Teilfahrzeugen (1,2) um die Hochachse (6) des Drehkranzgelenkes dämpft bzw. mit der diese Knickbewegungen steuerbar sind.

38. Gelenkverbindung nach Anspruch 36, **dadurch gekennzeichnet,** daß die Dämpfungs- bzw. Steuereinrichtung (123-125) eine Kolben-Zylindereinheit ist, deren Zylindereinheit in einem Gehäuse (123) angeordnet ist, das dem Teilfahrzeug (1) zugeordnet ist, dem die Außenhülsen der Metall-Gummi-Metall-Hülsenelemente (128, 137,138) zugeordnet sind und dessen einer Seite die Gegenverzahnung (120) in der Form einer Zahnstange zugeordnet ist, während die Kolbeneinheit dem Teilfahrzeug (2) zugeordnet ist, dem die Innenhülsen der Metall-Gummi-Metall-Hülsenelemente zugeordnet sind.

39. Gelenkverbindung nach Anspruch 38, **dadurch gekennzeichnet,** daß die Zylindereinheit zwei parallele Zylinder, entsprechend die Kolbeneinheit zwei parallele Kolben aufweist.

40. Gelenkverbindung nach einem der Ansprüche 38 und 39, **dadurch gekennzeichnet,** daß die Kolben-Zylindereinheit (123-125) in einem Rahmen (122) angeordnet ist, zwischen dem und dem zugehörigen Teilfahrzeug (1) die elastische Verbindung (128,137,138) angeordnet ist.

41. Gelenkverbindung nach Anspruch 33 oder 34, **dadurch gekennzeichnet,** daß das erste, mittlere Metall-Gummi-Metall-Hülsenelement (128) ballig bzw. tonnenförmig in der Weise ausgebildet ist, daß die Scheitellinie mit der Fahrzeugslängsmittellinie (10) zusammenfällt und sich von dieser Scheitellinie aus der Durchmesser der Gummihülse zu den Hülsenenden hin symmetrisch verringert.

42. Gelenkverbindung nach einem der Ansprüche 33,34 und 41, **dadurch gekennzeichnet,** daß die Innenhülsen (130, 142) aller drei Metall-Gummi-Metall-Hülsenelemente (128,137,138) Bolzen sind, wobei dieser Bolzen beim mittleren Metall-Gummi-Metall-Hülsenelement im Bereich der Gummihülse zylindrisch, zu beiden Seiten der Hülse ein Mehrkant (133,134) ist, während der Bolzen jedes seitlichen Metall-Gummi-Metall-Hülsenelementes durchgehend ein Mehrkant ist, der im Bereich der Gummiblöcke des jeweiligen Metall-Gummi-Metall-Hülsenelementes zwei in Fahrzeugslängsrichtung aufeinanderfolgende senkrechte und parallele Aufnahmeflächen für die Gummi-blöcke aufweist.

43. Gelenkverbindung nach Anspruch 42, **dadurch gekennzeichnet,** daß die beiden Enden jedes der Bolzen ( 33, 34, 37, 38) Anschlußmittel ( 32, 45) zum Anschluß am einen der beiden Teilfahrzeuge (2) aufweist, während die Außenhülse ( 29, 41) jedes der Metall-Gummi-Metall-Hülsenelemente ( 28, 41) eine Befestigungsplatte ( 36, 40) zur Befestigung am anderen der beiden Teilfahrzeuge (1) aufweist.

44. Gelenkverbindung nach einem der Ansprüche 33 bis 43, **dadurch gekennzeichnet,** daß dem Drehkranzgelenk (4) ein Mittelbügel (16) eines als Übergangsschutz zwischen den beiden Teilfahrzeugen angeordneten Faltenbalges derart zugeordnet ist, daß er seitenverschieblich ist und immer in der Winkelhalbierenden des Knickwinkels gehalten ist.

45. Gelenkverbindung nach Anspruch 44, **dadurch gekennzeichnet,** daß die Steuerung der Bewegungen des Mittelbügels (16) in Abhängigkeit von den relativen Drehbewegungen zwischen den beiden Drehkränzen (5,5') um die Gelenkhochachse (6) erfolgt.

46. Gelenkverbindung nach Anspruch 45, **dadurch gekennzeichnet,** daß das Mittel zur Steuerung der Bewegungen des Mittelbügels (16) eine Seilführung ist, von der eine Seilrolle um die Hochachse (6) des Drehkranzgelenkes (4) drehbar gelagert ist.

47. Gelenkverbindung nach Anspruch 46, **dadurch gekennzeichnet,** daß die drehbare Seilrolle auf einem Flansch (347) des unteren, inneren Drehkranzes (5') des Drehkranzgelenkes (4) gelagert ist.

48. Gelenkverbindung nach einem der Ansprüche 33 bis 47, **gekennzeichnet** durch eine zentrale Durchführung von Funktionskabeln (349) unterhalb des Drehkranzgelenkes (4).

49. Gelenkverbindung nach einem der Ansprüche 44 bis 48, **gekennzeichnet** durch eine seitliche Durchführung von Funktionskabeln (150), die einem Seitenteil des Mittelbügels (16) zugeordnet ist.

50. Gelenkverbindung nach einem der Ansprüche 33 bis 49 für den Fall eines Gelenkfahrzeugs, bei dem Nick- und Knickbewegungen zwischen beiden Teilfahrzeugen möglich, nicht aber Wankbewegungen (Relativbewegungen zwischen beiden Teilfahrzeugen um die Fahrzeuglängsachse) möglich sein sollen, **gekennzeichnet** durch zwei Metall-Gummi-Metall-Hülsenelemente (128a,128b) gemäß dem mittleren Metall-Gummi-Metall-Hülsenelement (128) in balliger bzw. tonnenförmiger Ausbildung, wobei jedes Metall-Gummi-Metall-Hülsenelement eine mittlere Scheitellinie hat, von der aus der Durchmesser der Gummihülse nach den beiden Hülsenelementen hin symmetrisch abnimmt und beide Metall-Gummi-Metall-Hülsenelemente mit ihren Scheitellinien symmetrisch zur Fahrzeuglängsachse angeordnet sind.

51. Gelenkverbindung nach Anspruch 50, **dadurch gekennzeichnet,** daß die beiden balligen bzw. tonnenförmigen Metall-Gummi-Metall-Hülsenelemente ( 28a, 28b) einzige elastische Verbindung zwischen zusammengehörendem Drehkranz (5') und Teilfahrzeug (1) sind.

52. Gelenkverbindung nach einem der Ansprüche 33 bis 49, **gekennzeichnet** durch ein einziges Multifunktionslager zwischen zusammengehörendem Drehkranz (5) und Teilfahrzeug (1) in symmetrischer Anordnung zur Fahrzeuglängsachse (10), durch die in Fahrzeuglängsrichtung (3) gerichteten Zug- und Druckkräfte zwischen beiden Teilfahrzeugen sowie vertikale Abstützkräfte unter geringer Verformung der elastischen Hülse und Nickbewegungen zwischen beiden Teilfahrzeugen um die Längsachse des Multifunktionslagers in gebotenem Umfang durch Schubverformung der Gummihülse möglich sind und gegebenenfalls Wankbewegungen zwischen beiden Teilfahrzeugen ebenfalls durch Schubverformung der Gummihülse möglich sind.

53. Gelenkverbindung nach Anspruch 52, **dadurch gekennzeichnet,** daß ein einziges Metall-Gummi-Metall-Hülsenelement in balliger bzw. tonnenförmiger Ausbildung und symmetrisch zur Scheitellinie nach den Hülsenenden hin abnehmenden Durchmesser der Gummihülse mit der Scheitellinie in der Fahrzeuglängsachse zwischen zweitem Drehkranz und anderem Teilfahrzeug angeordnet ist.

54. Gelenkverbindung nach einem der Ansprüche 1 bis 53, **dadurch gekennzeichnet,** daß der eine Drehkranz des Drehkranzgelenks (4) dessen dem Hinterwagen (2) eines Gelenkomnibusses starr zugeordneter äußerer, oberer Drehkranz (5) ist, der auf dem unteren, inneren Drehkranz (5') des Drehkranzgelenks um die Gelenkhochachse (6) drehbar abgestützt ist, wobei dieser innere Drehkranz am Vorderwagen (1) des Gelenkfahrzeugs über die elastische Verbindung abgestützt ist unter der Voraussetzung, daß der Vorderwagen an jedem seiner Enden mindestens ein Radpaar, der Hinterwagen lediglich an seinem hinteren Ende mindestens ein Radpaar aufweist.
